# EUROPÄISCHE PATENTSCHRIFT

(11) **EP 4 577 091 B1**
(45) Veröffentlichungstag und Bekanntmachung des Hinweises auf die Patenterteilung: **15.10.2025**
(21) Anmeldenummer: 24801223.9
(22) Anmeldetag: 04.11.2024
(51) Int. Cl.: A47L 15/42

(54) **GESCHIRRSPÜLMASCHINE MIT WÄRMEPUMPENVORRICHTUNG UND ZWISCHENKREISLAUF**
DISHWASHER COMPRISING A HEAT PUMP DEVICE AND AN INTERMEDIATE CIRCUIT
LAVE-VAISSELLE AVEC DISPOSITIF DE POMPE À CHALEUR ET CIRCUIT INTERMÉDIAIRE

(30) Priorität: 06.11.2023 DE 102023130575
(43) Veröffentlichungstag der Anmeldung: 02.07.2025
(73) Patentinhaber: Winterhalter Product & Technology GmbH, 88074 Meckenbeuren (DE)
(72) Erfinder: DORN, Markus, 88279 Amtzell (DE); RADTKE, Thomas, 88353 Kißlegg (DE); GESER, Bernd, 88142 Wasserburg (DE); BÜHL, Klaus, 78667 Villingendorf (DE)
(74) Vertreter: Appelt, Christian W.
(86) Internationale Anmeldenummer: PCT/EP2024/081048
(87) Internationale Veröffentlichungsnummer: WO 2025/098924

(56) Entgegenhaltungen:
- EP-A2- 2 443 984
- DE-A1- 102013 114 269
- DE-B3- 102013 111 670
- US-A1- 2012 047 961
- US-A1- 2017 209 020
- US-A1- 2022 325 959

## Beschreibung

Die vorliegende Erfindung bezieht sich auf eine Geschirrspülmaschine mit einer Wärmepumpenvorrichtung und einem Zwischenkreislauf.

Eine solche Geschirrspülmaschine ist beispielsweise aus DE 10 2013 111 670 B3 bekannt. Die darin beschriebene Geschirrspülmaschine ist ein Programmautomat, der einen Kältemittelkreislauf mit einem Verdampfer und einem Kondensator sowie einen Wärmetauscher umfasst. Der Verdampfer entzieht der Maschinenabluft und/oder der Umgebungsluft Energie und kühlt diese Luft. Der Kondensator erwärmt Frischwasser, welches einerseits das Nachspülwasser darstellt und andererseits über den Wärmetauscher das Spültankwasser erwärmt.

DE 10 2013 111 670 B3 beschreibt ein Verfahren zum Spülen von Spülgut in einem Programmautomaten sowie einem Programmautomaten zum Spülen von Spülgut, insbesondere zum Durchführen eines solchen Verfahrens, bei dem eine Wärmepumpe kontinuierlich über mehrere Spülvorgänge und mindestens einen, zwischen je zwei Spülvorgängen liegenden Unterbrechungszeitraum zum manuellen Eingeben des Spülguts in die Spülzone oder zum Entnehmen des Spülguts aus der Spülzone betrieben wird.

DE 10 2014 217 503 A1 beschreibt eine Spülmaschine zum Spülen von Spülgut, wobei die Spülmaschine eine Flüssigkeits-Transportleitung mit mindestens einer Zufuhrleitung zum Zuführen von Flüssigkeit auf einer ersten Temperatur und mit mindestens einer Abfuhrleitung zum Abführen von Flüssigkeit auf einer zweiten Temperatur aufweist, wobei die Zufuhrleitung und die Abfuhrleitung koaxial zueinander verlaufen, sodass entweder die Zufuhrleitung oder die Abfuhrleitung eine innenliegende Leitung ausbildet, welche in Ausdehnungsrichtung der Flüssigkeits-Transportleitung innerhalb der jeweils anderen von Zufuhrleitung bzw. Abfuhrleitung, welche ihrerseits eine außenliegende Leitung ausbildet, verläuft, und so einen Gegenstrom-Wärmetauscher ausbilden.

CN 201697502 U beschreibt eine Hauptkörperkomponente für einen Wärmetauscher und eine elektrische Heizung, die durch Verkleben oder thermisches Schmelzen eines geraden Kunststoffrohrs, eines Dreiwege-Kunststoffrohranschlusses und eines Vierwege-Kunststoffrohranschlusses gebildet wird.

Es ist eine Aufgabe der vorliegenden Erfindung, eine Geschirrspülmaschine mit einer Wärmepumpenvorrichtung bereitzustellen, um die Effizienz und die Nutzerfreundlichkeit unter Berücksichtigung der gewünschten Anwendungen zu verbessern und die Kosten zu senken.

Die obige Aufgabe wird durch eine Geschirrspülmaschine nach Anspruch 1 gelöst. Die Ansprüche 2 bis 14 betreffen besonders vorteilhafte Realisierungen der Geschirrspülmaschine nach Anspruch 1.

Eine erfindungsgemäße Geschirrspülmaschine kann beispielsweise eine Transportgeschirrspülmaschine oder eine Durchschubspülmaschine sein und kann insbesondere zur gewerblichen Anwendung dienen.

Die Geschirrspülmaschine umfasst einen Kältekreislauf, der einen Kältekreis-Hohlkörper, insbesondere ein Rohr oder einen Schlauch, zum Aufnehmen eines Kältemittels und einen Verdichter zum Verdichten des Kältemittels und zum Fördern des Kältemittels durch den Kältekreis-Hohlkörper umfasst. Die Geschirrspülmaschine umfasst ferner einen Zwischenkreislauf, der einen Zwischenkreis-Hohlkörper, insbesondere ein Rohr oder einen Schlauch, zum Aufnehmen eines Zwischenfluids und eine Zwischenkreis-Pumpe zum Fördern des Zwischenfluids durch den Zwischenkreis-Hohlkörper umfasst; der Zwischenkreislauf kann insbesondere ein geschlossener Kreislauf sein oder einen geschlossenen Kreislauf enthalten. Das Zwischenfluid kann insbesondere Wasser sein oder Wasser enthalten. Die Geschirrspülmaschine umfasst ferner einen Laugenkreislauf, der einen Laugenkreis-Hohlkörper zum Aufnehmen von Spülflüssigkeit, Laugenflüssigkeit oder Spültankwasser für einen Spülvorgang und eine Laugenkreis-Pumpe oder Spültankumwälzpumpe zum Fördern der Spülflüssigkeit, Laugenflüssigkeit oder des Spültankwassers durch den Laugenkreis-Hohlkörper umfasst.

Der Kältekreislauf umfasst ferner einen Verflüssiger oder Wärmetauscher oder Wärmeübertrager, der zum Übertragen von Wärme von dem Kältemittel auf das Zwischenfluid konfiguriert ist. Der Verflüssiger kann dem Kältemittel Wärme entziehen und die entzogene Wärme auf das Zwischenfluid übertragen. Der Verflüssiger kann Bestandteil des Kältekreislauf und/oder des Zwischenkreislaufs sein.

Die Geschirrspülmaschine umfasst ferner einen Koaxialwärmetauscher, der zum Übertragen von Wärme von dem Zwischenfluid auf die Spülflüssigkeit konfiguriert ist. Der Koaxialwärmetauscher kann dem Zwischenfluid Wärme entziehen und die entzogene Wärme auf die Spülflüssigkeit übertragen. Der Koaxialwärmetauscher umfasst einen Außen-Hohlkörper, insbesondere einen Schlauch, und einen Innen-Hohlkörper, insbesondere ein Wellrohr, der innerhalb des Außen-Hohlkörpers angeordnet ist. Vorzugsweise verlaufen der Innen-Hohlkörper und der Außen-Hohlkörper parallel zueinander. Vorzugsweise sind Querschnitte des Innen-Hohlkörpers und des Außen-Hohlkörpers, die beispielsweise kreisförmig sind, konzentrisch angeordnet. Der Innen-Hohlkörper ist zum Aufnehmen der Spülflüssigkeit konfiguriert, und ein Hohlraum oder Ringspalt zwischen dem Außen-Hohlkörper und dem Innen-Hohlkörper ist zum Aufnehmen des Zwischenfluids und zum Übertragen der Wärme von dem Zwischenfluid auf die Spülflüssigkeit konfiguriert. Insbesondere kann das die Spülflässigkeit im Innen-Hohlkörper im Gegenstrom zu dem Zwischenfluid im Hohlraum strömen. Umgekehrt kann jedoch auch der Innen-Hohlkörper zum Aufnehmen des Zwischenfluids und der Hohlraum zum Aufnehmen der Spülflüssigkeit konfiguriert sein. Der Koaxialwärmetauscher kann Bestandteil des Zwischenkreislaufs und/oder des Laugenkreislaufs sein.

Die Geschirrspülmaschine oder der Koaxialwärmetauscher umfasst ferner eine Verbindungseinheit, die zum Verbinden des Zwischenkreis-Hohlkörpers mit dem Außen-Hohlkörper und zum Verbinden des Laugenkreis-Hohlkörpers mit dem Innen-Hohlkörper konfiguriert ist. Die Verbindungseinheit umfasst ein Hohlkörper-Verbindungsteil oder T-Stück mit einem ersten Verbindungsabschnitt, einem zweiten Verbindungsabschnitt und einem dritten Verbindungsabschnitt sowie eine erste Tülle, eine zweite Tülle und eine dritte Tülle. Jede der ersten, zweiten und dritten Tülle kann insbesondere eine Schlauchtülle oder Rohrtülle sein.

Die erste Tülle ist zum Verbinden, insbesondere zum Befestigen oder dichten Befestigen, des ersten Verbindungsabschnitts mit dem Zwischenkreis-Hohlkörper konfiguriert. Dicht bedeutet hier insbesondere, dass das durch den Zwischenkreis-Hohlkörper und den Außen-Hohlkörper zirkulierende Zwischenfluid nicht durch die Verbindung zwischen dem Zwischenkreis-Hohlkörper und dem ersten Verbindungsabschnitt austreten oder auslaufen kann. Insbesondere kann ein erster Endabschnitt der ersten Tülle in den ersten Verbindungsabschnitt gesteckt und mit diesem verpresst werden, beispielsweise durch einen zwischen der ersten Tülle und dem ersten Verbindungsabschnitt befindlichen O-Ring, und der Zwischenkreis-Hohlkörper kann auf einen zweiten Endabschnitt der ersten Tülle gesteckt werden, wobei der zweite Endabschnitt der ersten Tülle dem ersten Endabschnitt der ersten Tülle entgegengesetzt angeordnet ist. Zum Verbinden kann ferner eine um den Zwischenkreis-Hohlkörper herum angeordnete Schlauchschelle verwendet werden. Ein O-Ring ist ein ringförmiges Dichtungselement gemeint, vorzugsweise mit einem runden bzw. O-förmigen Querschnitt.

Die zweite Tülle ist zum Verbinden, insbesondere zum Befestigen oder dichten Befestigen, des zweiten Verbindungsabschnitts mit dem Laugenkreis-Hohlkörper konfiguriert. Dicht bedeutet hier insbesondere, dass die durch den Laugenkreis-Hohlkörper und den Innen-Hohlkörper zirkulierende Spülflüssigkeit nicht durch die Verbindung zwischen dem Laugenkreis-Hohlkörper und dem zweiten Verbindungsabschnitt austreten oder auslaufen kann. Insbesondere kann ein Mittenabschnitt der zweiten Tülle in den zweiten Verbindungsabschnitt gesteckt und mit diesem verpresst werden, insbesondere durch einen zwischen der zweiten Tülle und dem zweiten Verbindungsabschnitt befindlichen O-Ring, und der Laugenkreis-Hohlkörper kann auf einen ersten Endabschnitt der zweiten Tülle gesteckt werden. Zum Verbinden kann ferner eine um den Laugenkreis-Hohlkörper herum angeordnete Schlauchschelle verwendet werden.

Die zweite Tülle ist außerdem zum Verbinden, insbesondere zum Befestigen oder dichten Befestigen, des zweiten Verbindungsabschnitts mit dem Innen-Hohlkörper konfiguriert, wobei die zweite Tülle einen Aufnahmeabschnitt zur Aufnahme des Innen-Hohlkörpers umfasst. Dicht bedeutet hier insbesondere, dass weder die Spülflüssigkeit noch das Zwischenfluid durch die Verbindung zwischen dem Innen-Hohlkörper und dem zweiten Verbindungsabschnitt austreten oder auslaufen kann. Insbesondere kann ein Mittenabschnitt der zweiten Tülle in den zweiten Verbindungsabschnitt gesteckt und mit diesem verpresst werden, wie oben beschrieben, und der Innen-Hohlkörper kann bis zu einem Anschlag in den Aufnahmeabschnitt gesteckt und mit diesem verpresst werden, wie weiter unten ausführlicher beschrieben wird. Der Aufnahmeabschnitt kann ein zweiter Endabschnitt der zweiten Tülle sein, der dem ersten Endabschnitt der zweiten Tülle entgegengesetzt angeordnet ist. Der Aufnahmeabschnitt kann als ein Abschnitt der zweiten Tülle mit einem Innendurchmesser ausgebildet sein, der größer als ein Außendurchmesser des Innen-Hohlkörpers ist, so dass der Innen-Hohlkörper in den Aufnahmeabschnitt eingeführt bzw. eingesetzt und dadurch von dem Aufnahmeabschnitt aufgenommen werden kann. Der Anschlag kann als ein Abschnitt der zweiten Tülle mit einem Innendurchmesser ausgebildet sein, der kleiner als der Außendurchmesser des Innen-Hohlkörpers ist, um ein Einführen des Innen-Hohlkörpers in den Aufnahmeabschnitt zu begrenzen.

Die dritte Tülle ist zum Verbinden, insbesondere zum Befestigen oder dichten Befestigen, des dritten Verbindungsabschnitts mit dem Außen-Hohlkörper konfiguriert. Dicht bedeutet hier insbesondere, dass die Spülflüssigkeit nicht durch die Verbindung zwischen dem Außen-Hohlkörper und dem dritten Verbindungsabschnitt austreten oder auslaufen kann. Insbesondere kann ein erster Endabschnitt der dritten Tülle in den dritten Verbindungsabschnitt gesteckt werden und mit diesem verpresst werden, insbesondere durch einen zwischen der dritten Tülle und dem dritten Verbindungsabschnitt und befindlichen O-Ring, und der Außen-Hohlkörper kann auf einen zweiten Endabschnitt der dritten Tülle gesteckt werden, wobei der zweite Endabschnitt der dritten Tülle dem ersten Endabschnitt der dritten Tülle entgegengesetzt angeordnet ist. Zum Verbinden kann ferner eine um den Außen-Hohlkörper herum angeordnete Schlauchschelle verwendet werden.

Da die erste Tülle den ersten Verbindungsabschnitt mit dem Zwischenkreis-Hohlkörper verbindet und die dritte Tülle den dritten Verbindungsabschnitt mit dem Außen-Hohlkörper verbindet, verbinden das Hohlkörper-Verbindungsteil, die erste und die dritte Tülle zusammen den Zwischenkreis-Hohlkörper mit dem Außen-Hohlkörper. Da die zweite Tülle den zweiten Verbindungsabschnitts mit dem Laugenkreis-Hohlkörper verbindet und den zweiten Verbindungsabschnitt mit dem Innen-Hohlkörper verbindet, verbinden das Hohlkörper-Verbindungsteil und die zweite Tülle den Laugenkreis-Hohlkörper mit dem Innen-Hohlkörper.

Die mittels des Kältekreislaufs zu erwärmende Spülflüssigkeit kann mit Spülchemie und Schmutzpartikeln, die z. B. während eines Spülvorgangs von dem zu reinigenden Spülgut abgelöst werden, versetzt bzw. verunreinigt sein. Daher soll die Spülflüssigkeit nicht direkt mit Wärmetauschern, insbesondere dem Verflüssiger, des Kältekreislaufs in Verbindung kommen, da diese sonst verstopft bzw. chemisch angegriffen werden und somit die Geschirrspülmaschine beschädigt bzw. ihre Effizienz reduziert werden kann. Aus diesem Grund wird die von dem Kältekreislauf über den Verflüssiger bereitgestellte Wärmeenergie zuerst auf ein Zwischenfluid übertragen, welches anschließend zu dem Koaxialwärmetauscher gefördert wird, der eine Systemtrennung vom Zwischenkreislauf zum Laugenkreislauf bildet. So kann aggressive Spülflüssigkeit nicht in den Zwischenkreislauf gelangen. Ferner hat der Zwischenkreislauf den Vorteil, dass die gesamte Wärmepumpe z. B. im Fehlerfall ohne Eingriff in den Kältekreislauf aus- und wieder eingebaut werden kann, wie später ausführlicher beschrieben wird.

Der Verbindungseinheit ermöglicht dabei eine besonders stabile und dichte Verbindung des Zwischenkreis-Hohlkörpers mit dem Außen-Hohlkörper und des Laugenkreis-Hohlkörpers mit dem Innen-Hohlkörper, wodurch eine sichere Systemtrennung zwischen Zwischenfluid und Spülflüssigkeit erreicht wird. Das durch Zwischenkreis-Hohlkörper und Außen-Hohlkörper strömende Zwischenfluid kommt somit nicht in Kontakt mit der durch Laugenkreis-Hohlkörper und Innen-Hohlkörper strömenden Spülflüssigkeit.

Ferner hat die zweite Tülle eine Doppelfunktion, da sie sowohl den zweiten Verbindungsabschnitts mit dem Laugenkreis-Hohlkörper verbindet als auch den zweiten Verbindungsabschnitt mit dem Innen-Hohlkörper verbindet. Somit kann eine einzige Tülle den Laugenkreis-Hohlkörper mit dem Innen-Hohlkörper sicher und dicht verbinden, und somit wird ein besonders kompakte und kostengünstige Verbindungseinheit und somit eine besonders kompakte und kostengünstige Geschirrspülmaschine erreicht.

Somit werden durch die erfindungsgemäßen Merkmale der Geschirrspülmaschine die Effizienz und die Nutzerfreundlichkeit der Geschirrspülmaschine erhöht und ihre Kosten gesenkt.

In einer bevorzugten Ausführungsform ist das Hohlkörper-Verbindungsteil T-förmig ausgebildet ist, wobei der zweite Verbindungsabschnitt und der dritte Verbindungsabschnitt parallel oder im Wesentlichen parallel angeordnet sind und der erste Verbindungsabschnitt senkrecht oder im Wesentlichen senkrecht zu dem zweiten Verbindungsabschnitt und dem dritten Verbindungsabschnitt angeordnet ist.

Hierdurch wird eine besonders kompakte, stabile und leicht herzustellende und somit kostengünstige Verbindungseinheit bzw. Geschirrspülmaschine erreicht.

Gemäß der Erfindung ist der Innen-Hohlkörper als ein Wellrohr mit ein oder mehreren Wellen ausgebildet. Das Wellrohr ist bevorzugt ein Rohr mit wellenförmig variierendem Durchmesser, d. h. in der Erstreckungsrichtung des Rohrs abwechselnd kleiner und größer werdendem Durchmesser. Der Aufnahmeabschnitt der zweiten Tülle ist über einen oder mehrere O-Ringe, vorzugsweise über einen, zwei, drei, vier oder fünf O-Ringe, die jeweils in einer entsprechenden Welle des Wellrohrs angeordnet sind, mit dem Wellrohr verpresst. Ein O-Ring ist ein ringförmiges Dichtungselement gemeint, vorzugsweise mit einem runden bzw. O-förmigen Querschnitt.

Hierdurch wird eine besonders stabile, sichere und dichte Verbindung des zweiten Verbindungsabschnitts mit dem Innen-Hohlkörper mittels der zweiten Tülle erreicht, so dass weder die Spülflüssigkeit noch das Zwischenfluid durch die Verbindung zwischen dem Innen-Hohlkörper und dem zweiten Verbindungsabschnitt austreten oder auslaufen kann. Insbesondere können beim Verpressen des Aufnahmeabschnitts mit dem Wellrohr die ein oder mehreren O-Ringe derart verformt werden, dass sie die entsprechenden Wellen vollständig auffüllen und dadurch eine dichte Verbindung mit dem Aufnahmeabschnitt herstellen. Durch die Verwendung von mehreren O-Ringen, insbesondere drei O-Ringen, wird die Verbindung des zweiten Verbindungsabschnitts mit dem Innen-Hohlkörper besonders sicher abgedichtet. Ferner sind O-Ringe kostengünstig produzierbar bzw. erhältlich, so dass die Kosten der Geschirrspülmaschine gesenkt werden.

In einer weiteren bevorzugten Ausführungsform weist der Aufnahmeabschnitt einen Vorsprung auf, der formschlüssig in eine Welle des Wellrohrs eingreift. Beispielsweise kann der Aufnahmeabschnitt über drei O-Ringe, die jeweils in einer ersten, zweiten, bzw. dritten Welle des Wellrohrs angeordnet sind, mit dem Wellrohr verpresst sein, und der Vorsprung kann formschlüssig in eine vierte Welle des Wellrohrs eingreifen.

Hierdurch wird erreicht, dass das Wellrohr auch bei Zugbelastung des Wellrohrs nicht aus dem Aufnahmeabschnitt herausgezogen werden kann. Somit wird eine besonders stabile, sichere und dichte Verbindung des zweiten Verbindungsabschnitts mit dem Wellrohr erreicht.

In einer weiteren bevorzugten Ausführungsform nimmt ein Innendurchmesser der zweiten Tülle von dem Mittenabschnitt zu dem Aufnahmeabschnitt hin ab. Vorzugsweise nimmt der Innendurchmesser von dem Mittenabschnitt zu dem Aufnahmeabschnitt hin stetig ab.

Dies ermöglicht eine Verringerung des Druckverlusts einer Strömung von Spülflüssigkeit von dem Laugenkreis-Hohlkörper in den Innen-Hohlkörper. Somit kann eine Beschädigung der Verbindungseinheit bzw. der Geschirrspülmaschine bzw. eine Verringerung ihrer Effizienz durch zu starke Druckverluste der Spülflüssigkeit verhindert werden.

In einer weiteren bevorzugten Ausführungsform ist die Verbindungseinheit zum Verbinden des Zwischenkreis-Hohlkörpers mit einem Anfangsabschnitt des Außen-Hohlkörpers und zum Verbinden des Laugenkreis-Hohlkörpers mit einem Anfangsabschnitt des Innen-Hohlkörpers konfiguriert, und die Geschirrspülmaschine umfasst eine weitere Verbindungseinheit, die zum Verbinden des Zwischenkreis-Hohlkörpers mit einem Endabschnitt des Außen-Hohlkörpers und zum Verbinden des Laugenkreis-Hohlkörpers mit einem Endabschnitt des Innen-Hohlkörpers konfiguriert.

Somit werden die oben beschriebenen Vorteile der erfindungsgemäßen Verbindungseinheit sowohl an dem Anfangsabschnitt des Koaxialwärmetauschers (z. B. der Eintrittsseite der Spülflüssigkeit) als auch an dem Endabschnitt des Koaxialwärmetauschers (z. B. der Austrittsseite der Spülflüssigkeit) erzielt. Somit werden die Effizienz und die Nutzerfreundlichkeit der Geschirrspülmaschine weiter verbessert und ihre Kosten gesenkt.

In einer weiteren bevorzugten Ausführungsform umfasst der Zwischenkreislauf einen Vorlagebehälter oder Ausgleichsbehälter zur Aufnahme des Zwischenfluids, wobei der Vorlagebehälter in Bezug auf eine Stromrichtung des Zwischenfluids stromaufwärts der Zwischenkreis-Pumpe angeordnet ist. Stromaufwärts kann insbesondere bedeuten, dass das Zwischenfluid durch den Zwischenkreislauf strömt, indem es zuerst durch den Vorlagebehälter, dann durch die Zwischenkreis-Pumpe, dann durch weitere Komponenten des Zwischenkreislaufs wie den Verflüssiger und den Koaxialwärmetauscher und dann wieder durch den Vorlagebehälter strömt. Insbesondere kann das Zwischenfluid direkt von dem Vorlagebehälter zu der Zwischenkreis-Pumpe strömen, ohne weitere Komponenten des Zwischenkreises wie oben beschrieben zu passieren. Die Geschirrspülmaschine kann ferner einen Überlaufschlauch umfassen, der den Vorlagebehälter mit einem Maschineninnenraum verbindet, so dass Luft oder überschüssiges Zwischenfluid durch den Überlaufschlauch aus dem Vorlagebehälter in den Maschineninnenraum abfließen kann.

Dies verhindert oder minimiert das Risiko von Kavitation in der Zwischenkreis-Pumpe und macht gewisse Verluste des Zwischenfluids z. B. in Folge von geringer Leckage oder durch geringes Abfließen des Zwischenfluids über den Überlaufschlauch tolerierbar, ohne dass die Zwischenkreis-Pumpe Luft ansaugt und der Volumenstrom im Zwischenkreislauf zum Erliegen kommt.

Besonders bevorzugt umfasst der Zwischenkreis-Hohlkörper einen Einström-Abschnitt, der in Bezug auf eine Stromrichtung des Zwischenfluids stromaufwärts des Vorlagebehälters angeordnet ist und mit dem Vorlagebehälter verbunden ist, so dass das Zwischenfluid durch den Einström-Abschnitt in den Vorlagebehälter einströmen kann, wobei eine Querschnittsfläche des Vorlagebehälters senkrecht zu einer Stromrichtung des Zwischenfluids durch den Vorlagebehälter größer ist als eine Querschnittsfläche des Einström-Abschnitts senkrecht zu einer Stromrichtung des Zwischenfluids durch den Einström-Abschnitt. Die Stromrichtung des Zwischenfluids durch den Vorlagebehälter kann insbesondere parallel zu dem Erdmagnetfeld verlaufen, wenn die Geschirrspülmaschine in einem Betriebszustand ist. Die Stromrichtung des Zwischenfluids durch den Einström-Abschnitt kann parallel zu dem Erdmagnetfeld und/oder parallel bzw. zu der Stromrichtung des Zwischenfluids durch den Vorlagebehälter verlaufen, wenn die Geschirrspülmaschine in dem Betriebszustand ist. Ferner kann die Geschirrspülmaschine eine Wärmepumpenvorrichtung umfassen, wobei die Wärmepumpenvorrichtung den Kältekreislauf und ein Wärmepumpengehäuse, in dem der Kältekreislauf angeordnet ist, umfasst, und der Vorlagebehälter kann innerhalb des Wärmepumpengehäuse angeordnet sein, insbesondere an einem in der positiven z-Richtung (wenn das Erdmagnetfeld in die negative z-Richtung weist) höchsten Punkt des Wärmepumpengehäuses bzw. an einem in der positiven z-Richtung höheren Punkt als andere Komponenten des Kältekreislaufs wie der Verdichter, der Verflüssiger, ein Verdampfer und/oder ein Expansionsventil.

Dies ermöglicht eine besonders effiziente Entlüftung des Zwischenkreislaufs, da das durch den Einström-Abschnitt des Zwischenkreis-Hohlkörpers in den Vorlagebehälter einströmende Zwischenfluid durch die Querschnittserweiterung im Vorlagebehälter langsamer strömt und dadurch im Zwischenfluid enthaltene Gas-/Luftblasen leichter im Vorlagebehälter nach oben (in die positive z-Richtung, d. h. die dem Erdmagnetfeld entgegengesetzte Richtung) aufsteigen können. Abgeschiedene Gas-/Luftblasen können dann z. B. über den Überlaufschlauch in den Maschineninnenraum entlüftet werden.

In einer weiteren bevorzugten Ausführungsform umfasst die Geschirrspülmaschine oder der Laugenkreislauf einen Tank oder Spültank. Die Laugenkreis-Pumpe ist zum Fördern von Spülflüssigkeit aus dem Spültank zu dem Koaxialwärmetauscher und von dem Koaxialwärmetauscher in den Spültank konfiguriert. Die Geschirrspülmaschine ist ferner so konfiguriert, dass sie vor Beginn eines Spülvorgangs den Spültank mit Spülflüssigkeit befüllt, insbesondere mit vorgewärmter Spülflüssigkeit aus einem Boiler. Die Geschirrspülmaschine ist ferner so konfiguriert, dass sie einen Wärmprozess zum Erwärmen der Spülflüssigkeit in dem Spültank ausführt, wobei der Wärmprozess umfasst: Aktivieren oder Einschalten des Verdichters und der Zwischenkreis-Pumpe zu einem ersten Zeitpunkt zum Erhöhen einer Temperatur des Zwischenfluids; und Aktivieren oder Einschalten der Laugenkreis-Pumpe zu einem zweiten Zeitpunkt nach dem ersten Zeitpunkt, wenn eine Differenz zwischen der Temperatur des Zwischenfluids und einer Temperatur der Spülflüssigkeit in dem Spültank einen vorbestimmten Wert überschreitet. Durch das Aktivieren des Verdichters und der Zwischenkreis-Pumpe zu dem ersten Zeitpunkt wird das Kältemittel durch den Kältekreislauf, insbesondere durch den Verflüssiger, gefördert, und das Zwischenfluid wird durch den Zwischenkreislauf, insbesondere durch den Verflüssiger und den Koaxialwärmetauscher, gefördert. In dem Verflüssiger wird Wärme von dem Kältemittel auf das Zwischenfluid übertragen, so dass die Temperatur des Zwischenfluids erhöht wird. Durch das Aktivieren der Laugenkreis-Pumpe zu dem zweiten Zeitpunkt wird dann die Spülflüssigkeit aus dem Tank zu dem Koaxialwärmetauscher gefördert. In dem Koaxialwärmetauscher wird Wärme von dem Zwischenfluid auf die Spülflüssigkeit übertragen, so dass die Temperatur der Spülflüssigkeit steigt. Anschließend wird die Spülflüssigkeit von dem Koaxialwärmetauscher zurück in den Spültank gefördert, so dass die Spülflüssigkeit in dem Spültank erwärmt wird. Vorzugsweise umfasst der Zwischenkreislauf oder die Geschirrspülmaschine einen Temperatursensor oder Temperaturfühler, der zur Erfassung der Temperatur des Zwischenfluids konfiguriert ist und der besonders bevorzugt in Bezug auf eine Stromrichtung des Zwischenfluids zwischen dem Verflüssiger und dem Koaxialwärmetauscher angeordnet ist. Ferner vorzugsweise umfasst die Geschirrspülmaschine einen weiteren Temperatursensor oder Temperaturfühler, der zur Erfassung der Temperatur der Spülflüssigkeit in dem Spültank konfiguriert ist.

Dies hat den Vorteil, dass, so lange das Zwischenfluid im Zwischenkreislauf keine höhere bzw. ausreichend höhere Temperatur aufweist als die Spülflüssigkeit im Spültank, die Laugenkreis-Pumpe deaktiviert bleibt. Wäre dies nicht der Fall, d. h. wäre der vorgenannte Wärmprozess nicht implementiert, und die Laugenkreis-Pumpe würde gleichzeitig mit der Wärmepumpe bzw. dem Verdichter aktiviert, wobei aber ggf. die Temperatur des Zwischenfluids im Zwischenkreislauf noch geringer wäre als die Temperatur der Spülflüssigkeit im Spültank, würde dem Spültank unnötig für den Spülprozess benötigte Wärme entzogen und an das Zwischenfluid übertragen. Durch den vorgenannten Wärmprozess wird somit gesichert, dass nach der dem Start der Wärmepumpe bzw. der Aktivierung des Verdichters zuerst das Kältemittel und über den Verflüssiger das Zwischenfluid im Zwischenkreislauf so weit erwärmt werden, bis eine Wärmeabgabe von dem Zwischenfluid über den Koaxial-Wärmetauscher an die Spülflüssigkeit möglich und effizient genug ist. Somit wird die Effizienz und Nutzerfreundlichkeit der Spülmaschine weiter erhöht.

Vorzugsweise ist die Geschirrspülmaschine so konfiguriert, dass sie den Wärmprozess sowohl während des Befüllens des Spültanks mit Spülflüssigkeit als auch während des Spülvorgangs ausführt. Dadurch wird die Geschirrspülmaschine deutlich effizienter als wenn z. B. die Beheizung der Spülflüssigkeit ausschließlich über im Spültank eingebaute elektrische Heizkörper erfolgen würde.

Beispielsweise kann die Geschirrspülmaschine eine Wärmepumpenvorrichtung, welche den Kältekreislauf umfasst, und eine Ansaugvorrichtung, die Maschinenluft aus einem Innenbereich der Geschirrspülmaschine und Umgebungsluft aus einem Umgebungsbereich der Geschirrspülmaschine ansaugt und ein Luftgemisch aus der Maschinenluft und der Umgebungsluft der Wärmepumpenvorrichtung zuführt, umfassen. Das Beheizen der Spülflüssigkeit im Spültank während des Befüllens des Spültanks, insbesondere also noch bevor ein Spülvorgang der Spülmaschine startet, kann somit zum Großteil unter Nutzung der in der Raumluft des Aufstellungsraums enthaltenen Energie erfolgen, da noch kein oder nur eine geringe Menge an Wrasen durch ein Luftsystem angesaugt und im Verdampfer genutzt werden kann, und ist dadurch deutlich effizienter als wenn die Beheizung der Spülflüssigkeit ausschließlich über im Spültank eingebaute elektrische Heizkörper erfolgen würde.

Besonders bevorzugt ist die Geschirrspülmaschine so konfiguriert, dass sie den Wärmprozess ausführt, wenn ein Wasserstand der Spülflüssigkeit in dem Spültank einen Minimal-Wasserstand überschreitet. Das Überschreiten des Minimal-Wasserstands der Spülflüssigkeit im Spültank ist als Kriterium zum Ausführen des Wärmprozesses bzw. zum Einschalten der Wärmepumpe vorteilhaft, da erst dann die Laugenkreis-Pumpe sicher betrieben werden kann, ohne dass diese Luft ansaugt bzw. kavitiert.

In einer weiteren bevorzugten Ausführungsform umfasst die Geschirrspülmaschine oder der Laugenkreislauf einen Tank oder Spültank. Die Laugenkreis-Pumpe ist zum Fördern von Spülflüssigkeit aus dem Spültank zu dem Koaxialwärmetauscher und von dem Koaxialwärmetauscher in den Spültank konfiguriert. Die Geschirrspülmaschine ist so konfiguriert, dass sie vor Beginn eines Spülvorgangs den Spültank mit vorgewärmter Spülflüssigkeit befüllt, insbesondere mit vorgewärmter oder vorgeheizter Spülflüssigkeit aus einem Boiler. Die Geschirrspülmaschine ist ferner so konfiguriert ist, dass sie einen Vorwärmprozess ausführt, wobei der Vorwärmprozess umfasst: Aktivieren oder Einschalten der Laugenkreis-Pumpe und der Zwischenkreis-Pumpe zu einem Vorwärm-Startzeitpunkt zum Vorwärmen des Kältemittels in dem Verflüssiger mittels der vorgewärmten Spülflüssigkeit; und Aktivieren oder Einschalten des Verdichters nach Ablauf einer vorbestimmten Vorwärm-Zeitspanne ab dem Vorwärm-Startzeitpunkt. Durch das Aktivieren der Laugenkreis-Pumpe und der Zwischenkreis-Pumpe zu dem Vorwärm-Startzeitpunkt wird die vorgewärmte Spülflüssigkeit aus dem Spültank zu dem Koaxialwärmetauscher gefördert, und das Zwischenfluid wird durch den Zwischenkreislauf, insbesondere durch den Koaxialwärmetauscher und den Verdichter, gefördert. In dem Koaxialwärmetauscher wird Wärme von der Spülflüssigkeit auf das Zwischenfluid übertragen. Dadurch wird der Verdichter vorgewärmt. Durch das Aktivieren des Verdichters nach Ablauf der vorbestimmten Vorwärm-Zeitspanne ab dem Vorwärm-Startzeitpunkt wird dann das Kältemittel durch den Kältekreis, insbesondere durch den Verflüssiger, gefördert, so dass Wärme von dem Kältemittel auf das Zwischenfluid übertragen werden kann.

Dies hat den Vorteil, dass die Geschirrspülmaschine auch bei kühlen Umgebungs- und Aufstellbedingungen sicher gestartet und betrieben werden kann. Wäre der vorgenannte Vorwärmprozess nicht implementiert, würde bei komplett kaltem Kältekreis beim Aktivieren des Verdichters noch kein oder nur ein geringer Verflüssigungsdruck des Kältemittels vorhanden sein bzw. vom Verdichter aufgebaut werden, so dass noch wenig Kältemittel durch den Kältekreislauf oder ein elektronisches Expansionsventil des Kältekreislaufs strömen würde. Wenn der Verdichter bereits Kältemittel aus einem Verdampfer des Kältekreislaufs absaugt, aber gleichzeitig noch wenig Kältemittel z. B. von dem Expansionsventil in den Verdampfer eingespritzt wird, würde der Druck im Verdampfer absinken und gegebenenfalls eine untere Abschaltschwelle unterschreiten, die zu einem Ausschalten des Verdichters führt. Durch den vorgenannten Vorwärmprozess wird dagegen noch vor dem Aktivieren bzw. Einschalten des Verdichters die Laugenkreis-Pumpe gleichzeitig mit der Zwischenkreis-Pumpe für eine vorbestimmte Zeitspanne gestartet. Dadurch wird bereits vorgewärmte Spülflüssigkeit aus dem Spültank zum Koaxial-Wärmetauscher gefördert, welche in diesem dann das Zwischenfluid des Zwischenkreises erwärmt. Das Zwischenfluid erwärmt wiederrum den Verflüssiger und das in diesem ebenfalls enthaltene Kältemittel. Durch die Erwärmung des Kältemittels im Verflüssiger steigt der Druck des Kältemittels auf der Hochdruckseite des Kältekreislaufs an und die Wärmepumpe bzw. der Kältekreislauf kann beim Aktivieren bzw. Einschalten des Verdichters, nach Ablauf der vorbestimmten Vorwärm-Zeitspanne, gleich von Beginn an durch den anliegenden Druck des Kältemittels z. B. stromaufwärts des elektronischen Expansionsventils und einen daraus resultierenden Kältemittelstrom ohne stärkeres Absinken des Verdampfungsdrucks des Kältemittels im Verdampfer starten, ohne dass eine Störung infolge zu geringen Verdampfungsdrucks des Kältemittels im Verdampfer auftritt. Somit wird die Effizienz und Nutzerfreundlichkeit der Spülmaschine weiter erhöht.

Vorzugsweise ist die Geschirrspülmaschine so konfiguriert ist, dass sie den Vorwärmprozess nicht ausführt, wenn ein Verflüssigungsdruck des Kältemittels einen Minimal-Verflüssigungsdruck überschreitet. Besonders bevorzugt umfasst die Geschirrspülmaschine einen Hochdrucksensor zur Detektion bzw. Erfassung des Verflüssigungsdrucks des Kältemittels bzw. eines hochdruckseitigen Kältemitteldrucks, der dem Verflüssigungsdruck gleicht, entspricht oder im Wesentlichen entspricht, und die Geschirrspülmaschine ist so konfiguriert, dass sie den Vorwärmprozess nicht ausführt, wenn der von dem Hochdrucksensor erfasste Verflüssigungsdruck des Kältemittels den Minimal-Verflüssigungsdruck überschreitet.

Dadurch können unnötige Vorwärmprozesse und dadurch eine unnötige Senkung der Gesamteffizienz der Spülmaschine vermieden werden, sollte der Verflüssiger noch eine ausreichend hohe Temperatur aufweisen.

Vorzugsweise ist die Geschirrspülmaschine so konfiguriert, dass sie den Vorwärmprozess während des Befüllens des Spültanks mit Spülflüssigkeit ausführt. Hierdurch wird die Effizienz der Geschirrspülmaschine erhöht. Besonders bevorzugt ist die Geschirrspülmaschine so konfiguriert ist, dass sie den Vorwärmprozess ausführt, wenn ein Wasserstand der Spülflüssigkeit in dem Spültank einen Minimal-Wasserstand überschreitet. Dies hat den Vorteil, dass die Laugenkreis-Pumpe sicher betrieben werden kann, ohne dass diese Luft ansaugt bzw. kavitiert.

Einige der in den vorstehenden Abschnitten genannten Aspekte der vorliegenden Erfindung können unabhängig von der erfindungsgemäßen Ausgestaltung des Koaxialwärmetauschers und/oder unabhängig von der erfindungsgemäßen Verbindungseinheit realisiert werden. Insbesondere bezieht sich die vorliegende Erfindung auch auf eine Geschirrspülmaschine, welche umfasst: einen Kältekreislauf, der einen Kältekreis-Hohlkörper zum Aufnehmen eines Kältemittels und einen Verdichter zum Verdichten des Kältemittels und zum Fördern des Kältemittels durch den Kältekreis-Hohlkörper umfasst; einen Zwischenkreislauf, der einen Zwischenkreis-Hohlkörper zum Aufnehmen eines Zwischenfluids und eine Zwischenkreis-Pumpe zum Fördern des Zwischenfluids durch den Zwischenkreis-Hohlkörper umfasst; und einen Laugenkreislauf, der einen Laugenkreis-Hohlkörper zum Aufnehmen einer Spülflüssigkeit und eine Laugenkreis-Pumpe zum Fördern der Spülflüssigkeit durch den Laugenkreis-Hohlkörper umfasst; wobei der Kältekreislauf einen Verflüssiger umfasst, der zum Übertragen von Wärme von dem Kältemittel auf das Zwischenfluid konfiguriert ist; wobei die Geschirrspülmaschine einen Koaxialwärmetauscher umfasst, der zum Übertragen von Wärme von dem Zwischenfluid auf die Spülflüssigkeit konfiguriert ist; wobei der Laugenkreislauf einen Spültank umfasst; wobei die Geschirrspülmaschine so konfiguriert ist, dass sie vor Beginn eines Spülvorgangs den Spültank mit Spülflüssigkeit befüllt; und wobei die Geschirrspülmaschine so konfiguriert ist, dass sie einen Wärmprozess zum Erwärmen der Spülflüssigkeit in dem Spültank ausführt, wobei der Wärmprozess umfasst: Aktivieren des Verdichters und der Zwischenkreis-Pumpe zu einem ersten Zeitpunkt zum Erhöhen einer Temperatur des Zwischenfluids; und Aktivieren der Laugenkreis-Pumpe zu einem zweiten Zeitpunkt nach dem ersten Zeitpunkt, wenn eine Differenz zwischen der Temperatur des Zwischenfluids und einer Temperatur der Spülflüssigkeit in dem Spültank einen vorbestimmten Wert überschreitet.

Ferner bezieht sich die Erfindung auf eine Geschirrspülmaschine, welche umfasst: einen Kältekreislauf, der einen Kältekreis-Hohlkörper zum Aufnehmen eines Kältemittels und einen Verdichter zum Verdichten des Kältemittels und zum Fördern des Kältemittels durch den Kältekreis-Hohlkörper umfasst; einen Zwischenkreislauf, der einen Zwischenkreis-Hohlkörper zum Aufnehmen eines Zwischenfluids und eine Zwischenkreis-Pumpe zum Fördern des Zwischenfluids durch den Zwischenkreis-Hohlkörper umfasst; und einen Laugenkreislauf, der einen Laugenkreis-Hohlkörper zum Aufnehmen einer Spülflüssigkeit und eine Laugenkreis-Pumpe zum Fördern der Spülflüssigkeit durch den Laugenkreis-Hohlkörper umfasst; wobei der Kältekreislauf einen Verflüssiger umfasst, der zum Übertragen von Wärme von dem Kältemittel auf das Zwischenfluid konfiguriert ist; wobei die Geschirrspülmaschine einen Koaxialwärmetauscher umfasst, der zum Übertragen von Wärme von dem Zwischenfluid auf die Spülflüssigkeit konfiguriert ist; wobei der Laugenkreislauf einen Spültank umfasst; wobei die Geschirrspülmaschine so konfiguriert ist, dass sie vor Beginn eines Spülvorgangs den Spültank mit vorgewärmter Spülflüssigkeit befüllt; und wobei die Geschirrspülmaschine so konfiguriert ist, dass sie einen Vorwärmprozess ausführt, wobei der Vorwärmprozess umfasst: Aktivieren der Laugenkreis-Pumpe und der Zwischenkreis-Pumpe zu einem Vorwärm-Startzeitpunkt zum Vorwärmen des Kältemittels in dem Verflüssiger mittels der vorgewärmten Spülflüssigkeit; und Aktivieren des Verdichters nach Ablauf einer vorbestimmten Vorwärm-Zeitspanne ab dem Vorwärm-Startzeitpunkt.

Ferner bezieht sich die vorliegende Erfindung auf ein Wärmverfahren für eine Geschirrspülmaschine, vorzugsweise eine Geschirrspülmaschine nach einem der Ansprüche 1 bis 15 oder eine Geschirrspülmaschine wie oben beschrieben, wobei das Wärmverfahren ein Verfahren zum Erwärmen der Spülflüssigkeit in dem Spültank ist, wobei das Wärmverfahren umfasst: Aktivieren des Verdichters und der Zwischenkreis-Pumpe zu einem ersten Zeitpunkt zum Erhöhen einer Temperatur des Zwischenfluids; und Aktivieren der Laugenkreis-Pumpe zu einem zweiten Zeitpunkt nach dem ersten Zeitpunkt, wenn eine Differenz zwischen der Temperatur des Zwischenfluids und einer Temperatur der Spülflüssigkeit in dem Spültank einen vorbestimmten Wert überschreitet.

Ferner bezieht sich die vorliegende Erfindung auf ein Vorwärmverfahren für eine Geschirrspülmaschine, vorzugsweise eine Geschirrspülmaschine nach einem der Ansprüche 1 bis 15 oder eine Geschirrspülmaschine wie oben beschrieben, wobei das Vorwärmverfahren umfasst: Aktivieren der Laugenkreis-Pumpe und der Zwischenkreis-Pumpe zu einem Vorwärm-Startzeitpunkt zum Vorwärmen des Kältemittels in dem Verflüssiger mittels der vorgewärmten Spülflüssigkeit; und Aktivieren des Verdichters nach Ablauf einer vorbestimmten Vorwärm-Zeitspanne ab dem Vorwärm-Startzeitpunkt.

Diese und weitere Merkmale und Vorteile der Erfindung werden anhand der beigefügten Zeichnungen, die besonders vorteilhafte Ausführungsformen zeigen, deutlich. Es zeigen:
- Fig. 1: eine schematische Gesamtübersicht über eine erfindungsgemäße Ausführungsform einer Geschirrspülmaschine;
- Fig. 2: den Kältekreislauf der Geschirrspülmaschine aus Fig. 1;
- Fig. 3: den Zwischenkreislauf der Geschirrspülmaschine aus Fig. 1;
- Fig. 4: den Laugenkreislauf der Geschirrspülmaschine aus Fig. 1;
- Fig. 5: das Luftsystem mit Trockenzone der Geschirrspülmaschine aus Fig. 1;
- Fig. 6: eine schematische Ansicht einer Verbindungseinheit und einer weiteren Verbindungseinheit;
- Fig. 7: eine schematische Ansicht einer Verbindungseinheit;
- Fig. 8A: eine Wärmepumpe; und
- Fig. 8B: einen vergrößerten Ausschnitt aus Fig. 8A.

Die folgende Beschreibung bezieht sich auf eine Transportgeschirrspülmaschine 2 als ein Beispiel für eine Geschirrspülmaschine 2; die Erfindung ist jedoch nicht auf eine Transportgeschirrspülmaschine 2 beschränkt, sondern bezieht sich allgemein auf eine Geschirrspülmaschine 2, die auch z. B. eine Durchschubgeschirrspülmaschine sein kann. Ebenso werden im Folgenden eine Wärmepumpe 1 als Beispiel für eine Wärmepumpenvorrichtung 1, Wrasen 3 als Beispiel für Maschinenluft 3, Raumluft 4 als Beispiel für Umgebungsluft 4, Geschirr 5 als Beispiel für Spülgut 5, Raumluft-/Wrasengemisch 43 als Beispiel für ein Luftgemisch 43, ein Aufstellraum 45 als Beispiel für einen Umgebungsbereich 45, ein Fettfilter 46 als Beispiel für eine Filtereinheit 46, ein Zwischenkreistemperaturfühler 47 als Beispiel für einen Temperatursensor 47, eine Vorspülzone 51 und/oder eine Hauptspülzone 52 und/oder eine Nachspülzone 31 als Beispiele für eine Spülzone 51, 52, 31, ein Schlauch 54 als Beispiel für einen Außen-Hohlkörper 54, ein Wellrohr 55 als Beispiel für einen Innen-Hohlkörper 55, ein T-Stück 56 als Beispiel für ein Hohlkörper-Verbindungsteil 56, eine Schlauchtülle 57 als Beispiel für eine dritte Tülle 57 oder eine erste Tülle 78, eine Schlauchtülle des Spülflüssigkeitsein- bzw. Austritts 61 als Beispiel für eine zweite Tülle 61, ein Ringspalt 59 als Beispiel für einen Hohlraum 59, eine Aufnahme 62 als Beispiel für einen Aufnahmeabschnitt 62, eine frontseitige Blechlasche als Beispiel für ein Halteelement, eine Anschlaglasche als Beispiel für ein Führungselement, sowie eine vierte Wellrohrwelle für Formschluss 77 als Beispiel für einen Vorsprung 77 beschrieben. Ferner wird mit zusätzlicher Raumluftansaugung 38 ein System umfassend oder bestend aus ein oder mehreren Wärmepumpengehäuse-Öffnungen und einer integrierten Filtereinheit 46, z. B. einem integrierten Fettfilter 46 bezeichnet. Ferner werden die Begriffe Maschinenluft 3 und Maschinenabluft 3, Kältekreislauf 6 und Kältekreis 6 synonym verwendet, ebenso wie Zwischenkreislauf 17 und sekundärer Zwischenkreislauf 17, Zwischenfluid 18 und sekundäres Fluid 18, Laugenkreislauf 25 und Laugenkreis 25, Laugenkreis-Pumpe 27 und Tankumwälzpumpe 27 sowie Steuereinheit und Spülmaschinensteuereinheit.

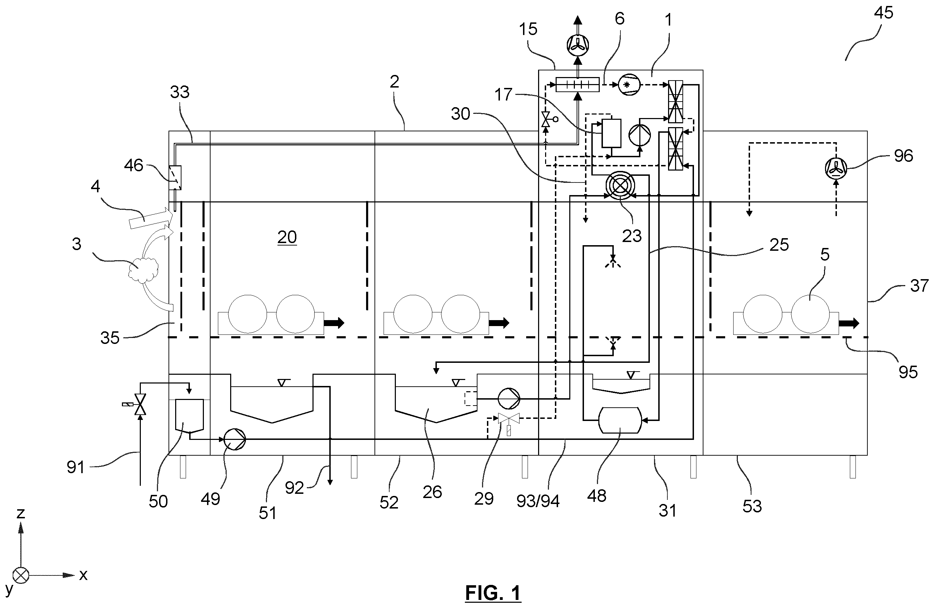

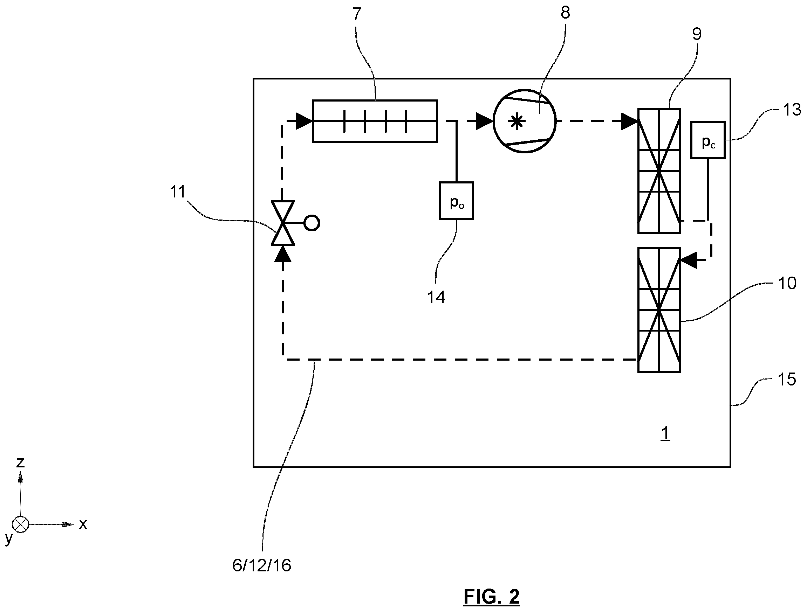

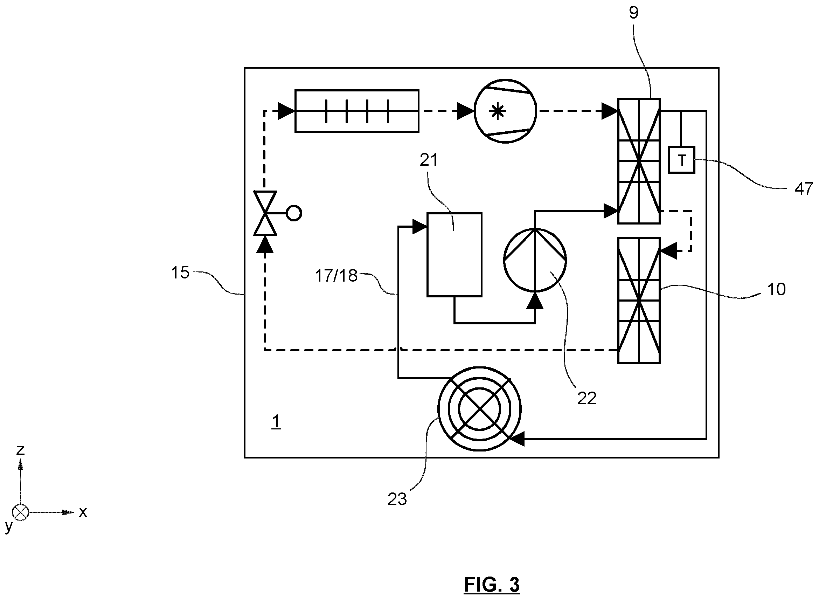

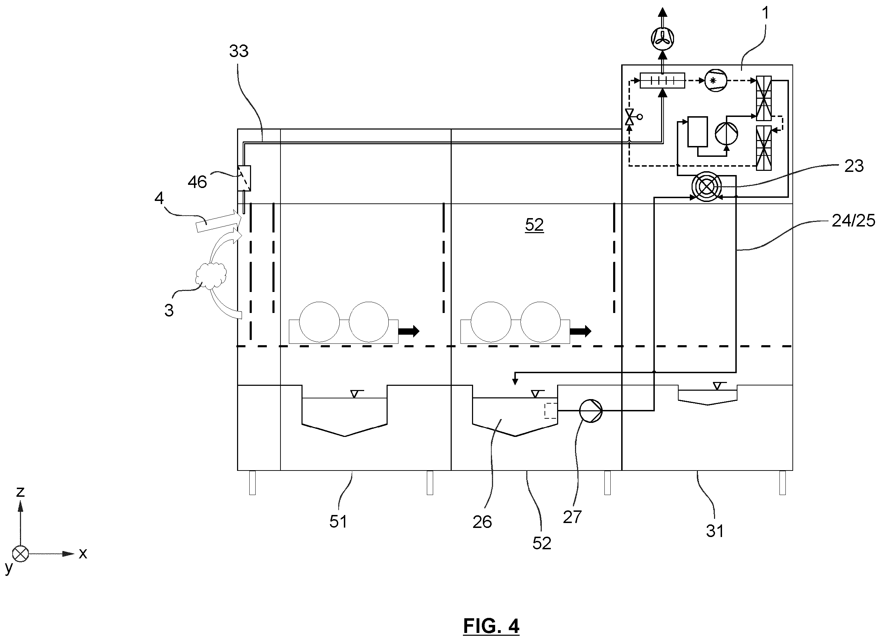

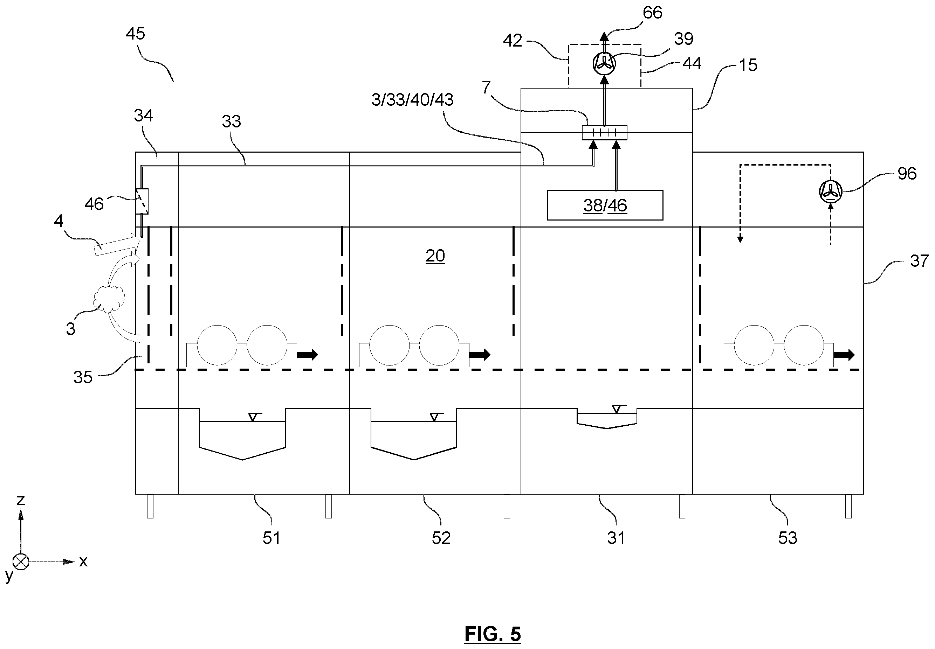

Fig. 1 zeigt eine schematische Gesamtübersicht über eine erfindungsgemäße Ausführungsform einer Geschirrspülmaschine 2; Fig. 2 zeigt insbesondere einen Kältekreislauf 6 der Geschirrspülmaschine 2 aus Fig. 1; Fig. 3 zeigt insbesondere einen Zwischenkreislauf 17 der Geschirrspülmaschine 2 aus Fig. 1; Fig. 4 zeigt insbesondere einen Laugenkreislauf 25 der Geschirrspülmaschine 2 aus Fig. 1; und Fig. 5 zeigt insbesondere ein Luftsystem mit Trockenzone 53 der Geschirrspülmaschine 2 aus Fig. 1.

Insbesondere zeigen Fig. 1 bis 5 jeweils eine gewerbliche Transportgeschirrspülmaschine 2 zur hohen Rückgewinnung von in der Maschinenabluft 3 und die Spülmaschine 2 umgebenden Raumluft 4 enthaltenen Wärmeenergie, die durch die Spülprozesse innerhalb der Spülmaschine 2, durch die Spülmaschine 2 selbst und durch das gespülte Geschirr 5 an die Maschinenabluft 3 und Raumluft 4 übertragen werden. Durch eine hohe Wärmerückgewinnung aus der Maschinenabluft 3 und Raumluft 4 und Übertragung dieser Energie wieder an die Spülprozesse, sinkt der nötige Energiebedarf zur Aufrechterhaltung der Spülprozesse signifikant. Der Maschinenabluft 3 und Raumluft 4 wird dabei ein großer Teil der Wärme und Feuchtigkeit wieder entzogen, die zuvor durch die Spülprozesse, die Spülmaschine 2 selbst und das warme/feuchte Geschirr 5 an sie abgegeben wurde.

Die Wärmepumpe 1 ist in einem Wärmepumpengehäuse 15 eingebaut und enthält einen Kältekreis 6, bestehend aus Verdampfer 7, Verdichter 8, einer Reihenschaltung aus Verflüssiger 9 und Unterkühler 10, einem elektronischen Expansionsventil 11, sowie den die vorgenannten Bauteile verbindenden Rohrleitungen 12 in unterschiedlichen Nennweiten. Der Kältekreis 6 enthält ferner einen Hochdrucksensor 13 zur Erfassung des hochdruckseitigen Kältemitteldrucks, der dem Verflüssigungsdruck des Kältemittels entspricht oder im Wesentlichen entspricht, einen Niederdrucksensor 14 zur Erfassung des niederdruckseitigen Kältemitteldrucks der dem Verdampfungsdruck des Kältemittels entspricht oder im Wesentlichen entspricht, sowie weitere Bauteile.

Im Kältekreis 6 zirkuliert ein Kältemittel 16, welches auf niedrigem Druck im Verdampfer 7 Wärmeenergie aus der Maschinenabluft 3 aufnimmt, dadurch verdampft und die Maschinenabluft 3 abkühlt. Dabei kondensiert auch teilweise der in der Maschinenabluft 3 enthaltene Wasserdampf. Diese Kondensationsenergie wird ebenfalls über den Verdampfer 7 an das Kältemittel 16 übertragen. Der Verdichter 8 saugt das gasförmige Kältemittel 16 nun an und verdichtet / komprimiert es auf einen höheren Druck. Dabei erwärmt sich das Kältemittel 16 stark und wird im stromabwärts (aus Kältemittelsicht) des Verdichters 8 angeordneten Verflüssiger 9 abgekühlt und dabei wieder kondensiert / verflüssigt. Die dabei freiwerdende Wärmeenergie wird an ein, in einem sekundären Zwischenkreislauf 17 zirkulierendes, sekundäres Fluid 18 abgegeben, welches dabei erwärmt wird. Das vollständig oder zumindest teilweise verflüssigte Kältemittel 16 wird anschließend im aus Kältemittelsicht stromabwärts des Verflüssigers 9 angeordneten Unterkühler 10 noch weiter abgekühlt / unterkühlt bzw. zuerst noch das restliche gasförmige Kältemittel 16 verflüssigt / kondensiert. Die dabei freiwerdende Wärmeenergie wird an eine im Nachspülsystem 94 befindliche Nachspülflüssigkeit 93 abgegeben, welche mittels einer Nachspülpumpe 49 aus einem Wassernetztrenner/Airgap 50 angesaugt und dann zum Unterkühler 10 gefördert, in diesem vorgewärmt und anschließend in einem elektrisch beheizten Boiler 48 noch auf eine gewünschte Nachspültemperatur erhitzt wird. Das vollständig verflüssigte und unterkühlte Kältemittel 16 wird nun aus Kältemittelsicht stromabwärts des Unterkühlers 10 durch das elektronische Expansionsventil 11 wieder auf einen niedrigeren Druck entspannt, wobei es sich stark abkühlt und teils wieder verdampft. Dieses Gemisch aus noch flüssigem und gasförmigem Kältemittel 16 wird dann wieder in den Verdampfer 7 eingeleitet und der Prozess beginnt von Neuem.

Der Verdampfer 7 der Wärmepumpe 1 ist Teil des Luftsystems 33, welches neben dem Verdampfer 7 im Wesentlichen aus einem ersten Ansaugbereich 34 auf der Geschirreinlassseite 35, einem zweiten Ansaugbereich auf der Geschirrauslassseite 37 oder je nach Spülmaschinenvariante einer zusätzlichen Raumluftansaugung 38, einem drehzahlregelbaren Fortluftventilator 39 und einem System aus Luftrohren 40 besteht. Durch das System aus Luftrohren 40 wird die vom Fortluftventilator 39 am ersten Ansaugbereich 34 und zweiten Ansaugbereich oder der zusätzlichen Raumluftansaugung 38 angesaugte Mischung aus Raumluft 4 und während des Spülprozesses entstehenden Wrasen, das so genannte Raumluft-/Wrasengemisch 43, zum Wärmepumpengehäuse 15 geleitet und durch Wärmeaustausch mit dem Kältemittel 16 mittels des Verdampfers 7 abgekühlt und entfeuchtet. Der Fortluftventilator 39 ist dabei aus Sicht des Raumluft-/Wrasengemischs 43 stromabwärts des Verdampfers 7 in einem separaten und oberhalb des Wärmepumpengehäuses 15 befestigten Ventilatorgehäuses 42 untergebracht. Das gekühlte und entfeuchtete Raumluft-/Wrasengemisch 43 tritt über eine Vielzahl an Öffnungen 44 im Ventilatorgehäuse 42 wieder in den die Spülmaschine 2 umgebenden Aufstellraum 45 aus. Zur Schmutz- und auch Tröpfchenabscheidung, um das Luftsystem 33 vor gröberen Verunreinigungen zu schützen, ist sowohl im ersten Ansaugbereich 34, als auch im zweiten Ansaugbereich und in der zusätzlichen Raumluftansaugung 38 jeweils ein Fettfilter 46 integriert.

Der sekundäre Zwischenkreislauf 17, dessen sekundäres Fluid 18 vom Verflüssiger 9 erwärmt wurde, ist ein zur Atmosphäre des Aufstellungsraums der gewerblichen Transportspülmaschine 2 bzw. dem Spülmaschineninnenraum 20 hin offener Kreislauf. Der sekundäre Zwischenkreislauf 17 besteht aus einem Vorlagebehälter 21, zur Sicherung einer gewissen Wasservorlage für die aus Sicht des sekundären Fluids 18 stromabwärts angeordnete Zwischenkreis-Pumpe 22, welche das sekundäre Fluid 18 zum Verflüssiger 9 fördert, einem Zwischenkreistemperaturfühler 47 am Austritt des Verflüssigers 9, dem Koaxialwärmetauscher 23, welcher die im sekundären Fluid 18 nach deren Erwärmung im Verflüssiger 9 enthaltene Wärmenergie an eine Spülflüssigkeit 24 abgibt und eine Systemtrennung zum Laugenkreis 25 darstellt, sowie den nicht näher beschrieben diversen Schlauchverbindungen zwischen vorgenannten Bauteilen. Der sekundäre Zwischenkreislauf 17 wird durch ein über Schläuche mit dem Nachspülsystem 94 verbundenes Zwischenkreis-Füllventil 29 so lange mit Nachspülflüssigkeit 93 gefüllt, bis der sekundäre Zwischenkreis 17 vollständig gefüllt ist und über einen Überlaufschlauch 30 in die Nachspülzone 31 überläuft. Dieser Füllvorgang wird mittels einer Spülmaschinensteuereinheit aktiviert bzw. nach Abschluss des Füllvorgangs wieder deaktiviert.

Der vorgenannte Laugenkreis 25 dient dazu, die für den Spülprozess in einer in Geschirrtransportrichtung stromabwärts einer optional vorhandenen Vorspülzone 51 gelegenen ersten Hauptspülzone 52 erforderliche und mit entsprechender Spülchemie und vom Geschirr 5 abgespülten Schmutzpartikeln versetzten Spülflüssigkeit 24 aus einem Spültank 26 anzusaugen und mittels Tankumwälzpumpe 27 zum Koaxialwärmetauscher 23 zu fördern, in welchem die Spülflüssigkeit 24 durch die im sekundären Fluid 18 enthaltene Wärmeenergie erwärmt wird. Die Spülflüssigkeit 24 fließt anschließend wieder zurück in den Spültank 26. Der zur Systemtrennung eingesetzte Koaxialwärmetauscher 23 stellt dabei sicher, dass die mit Spülchemie und Schmutzpartikeln beladene Spülflüssigkeit 24 nicht mit dem sekundären Fluid 18 in Kontakt kommt und so der Verflüssiger 9 der Wärmepumpe 1 geschützt wird.

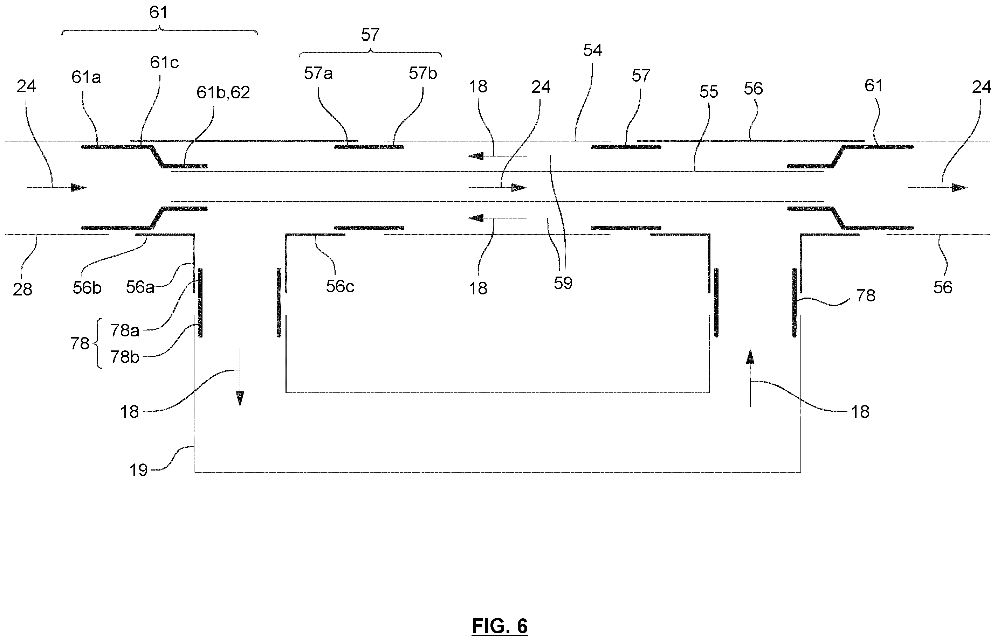

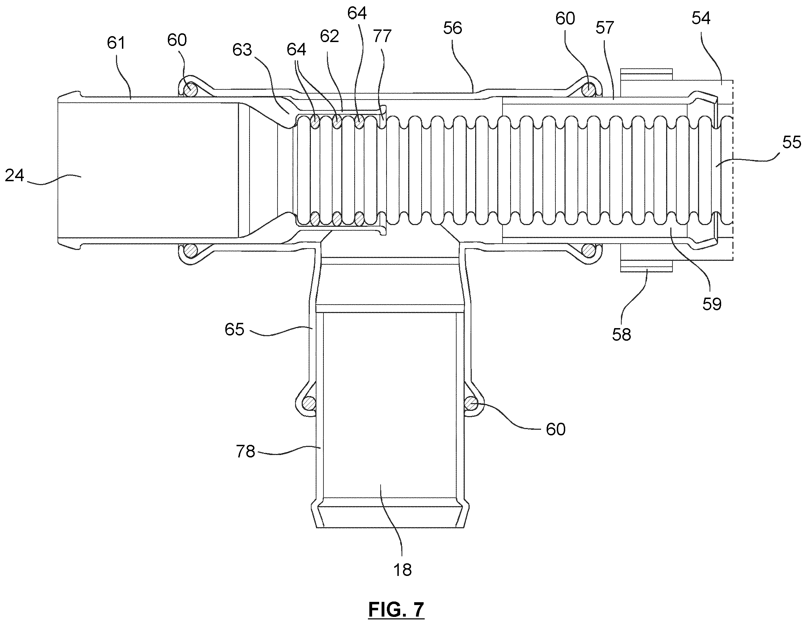

Wie insbesondere in Fig. 6 und Fig. 7 zu sehen ist, umfasst die Geschirrspülmaschine 2 gemäß einer Ausführungsform der vorliegenden Erfindung: einen Kältekreislauf 6, der einen Kältekreis-Hohlkörper 12 zum Aufnehmen eines Kältemittels 16 und einen Verdichter 8 zum Verdichten des Kältemittels 16 und zum Fördern des Kältemittels 16 durch den Kältekreis-Hohlkörper 12 umfasst; einen Zwischenkreislauf 17, der einen Zwischenkreis-Hohlkörper 19 zum Aufnehmen eines Zwischenfluids 18 und eine Zwischenkreis-Pumpe 22 zum Fördern des Zwischenfluids 18 durch den Zwischenkreis-Hohlkörper 19 umfasst; und einen Laugenkreislauf 25, der einen Laugenkreis-Hohlkörper 28 zum Aufnehmen einer Spülflüssigkeit 24 und eine Laugenkreis-Pumpe 27 zum Fördern der Spülflüssigkeit 24 durch den Laugenkreis-Hohlkörper 28 umfasst; wobei der Kältekreislauf 6 einen Verflüssiger 9 umfasst, der zum Übertragen von Wärme von dem Kältemittel 16 auf das Zwischenfluid 18 konfiguriert ist; wobei die Geschirrspülmaschine 2 einen Koaxialwärmetauscher 23 umfasst, der zum Übertragen von Wärme von dem Zwischenfluid 18 auf die Spülflüssigkeit 24 konfiguriert ist, wobei der Koaxialwärmetauscher 23 einen Außen-Hohlkörper 54 und einen Innen-Hohlkörper 55, der innerhalb des Außen-Hohlkörpers 54 angeordnet ist, umfasst, wobei der Innen-Hohlkörper 55 zum Aufnehmen der Spülflüssigkeit 24 konfiguriert ist, wobei ein Hohlraum 59 zwischen dem Außen-Hohlkörper 54 und dem Innen-Hohlkörper 55 zum Aufnehmen des Zwischenfluids 18 konfiguriert ist; wobei die Geschirrspülmaschine 2 eine Verbindungseinheit umfasst, die zum Verbinden des Zwischenkreis-Hohlkörpers 19 mit dem Außen-Hohlkörper 54 und zum Verbinden des Laugenkreis-Hohlkörpers 28 mit dem Innen-Hohlkörper 55 konfiguriert ist; wobei die Verbindungseinheit ein Hohlkörper-Verbindungsteil 56 mit einem ersten Verbindungsabschnitt 56a, einem zweiten Verbindungsabschnitt 56b und einem dritten Verbindungsabschnitt 56c sowie eine erste Tülle 78, eine zweite Tülle 61 und eine dritte Tülle 57 umfasst; wobei die erste Tülle 78 zum Verbinden des ersten Verbindungsabschnitts 56a mit dem Zwischenkreis-Hohlkörper 19 konfiguriert ist; wobei die zweite Tülle 61 zum Verbinden des zweiten Verbindungsabschnitts 56b mit dem Laugenkreis-Hohlkörper 28 konfiguriert ist und zum Verbinden des zweiten Verbindungsabschnitts 56b mit dem Innen-Hohlkörper 55 konfiguriert ist, wobei die zweite Tülle 61 einen Aufnahmeabschnitt 62 zur Aufnahme des Innen-Hohlkörpers 55 umfasst; und wobei die dritte Tülle 57 zum Verbinden des dritten Verbindungsabschnitts 56c mit dem Außen-Hohlkörper 54 konfiguriert ist.

Insbesondere kann ein erster Endabschnitt 78a der ersten Tülle 78 in den ersten Verbindungsabschnitt 56a gesteckt und mit diesem verpresst werden, und der Zwischenkreis-Hohlkörper 19 kann auf einen zweiten Endabschnitt 78b der ersten Tülle 78 gesteckt werden. Ferner kann ein Mittenabschnitt 61c der zweiten Tülle 61 in den zweiten Verbindungsabschnitt 56b gesteckt und mit diesem verpresst werden, und der Laugenkreis-Hohlkörper 28 kann auf einen ersten Endabschnitt 61a der zweiten Tülle 61 gesteckt werden. Ferner kann der Innen-Hohlkörper 55 bis zu einem Anschlag 63 in den Aufnahmeabschnitt 62 gesteckt und mit diesem verpresst werden. Der Aufnahmeabschnitt 62 kann ein dritter Endabschnitt 61b der zweiten Tülle 61 sein. Ferner kann ein erster Endabschnitt 57a der dritten Tülle 57 in den dritten Verbindungsabschnitt 56c gesteckt werden und mit diesem verpresst werden, und der Außen-Hohlkörper 54 kann auf einen zweiten Endabschnitt 57b der dritten Tülle 57 gesteckt werden.

Das Hohlkörper-Verbindungsteil 56 kann T-förmig ausgebildet sein, wobei der zweite Verbindungsabschnitt 56b und der dritte Verbindungsabschnitt 56c parallel angeordnet sind und der erste Verbindungsabschnitt 56a senkrecht zu dem zweiten Verbindungsabschnitt 56b und dem dritten Verbindungsabschnitt 56c angeordnet ist. Der Innen-Hohlkörper 55 kann als ein Wellrohr 55 mit ein oder mehreren Wellen ausgebildet sein, wobei der Aufnahmeabschnitt 62 der zweiten Tülle 61 über einen oder mehrere O-Ringe 64, vorzugsweise über drei O-Ringe 64, die jeweils in einer entsprechenden Welle des Wellrohrs angeordnet sind, mit dem Wellrohr verpresst ist. Der Aufnahmeabschnitt 62 kann einen Vorsprung 77 aufweisen, der formschlüssig in eine Welle des Wellrohrs eingreift. Ein Innendurchmesser der zweiten Tülle 61, 61a-c kann von einem Mittenabschnitt der zweiten Tülle 61, 61a-c zu dem Aufnahmeabschnitt 62 hin abnehmen. Die Verbindungseinheit kann zum Verbinden des Zwischenkreis-Hohlkörpers 19 mit einem Anfangsabschnitt des Außen-Hohlkörpers 54 und zum Verbinden des Laugenkreis-Hohlkörpers 28 mit einem Anfangsabschnitt des Innen-Hohlkörpers 55 konfiguriert sein, wobei die Geschirrspülmaschine 2 eine weitere Verbindungseinheit umfasst, die zum Verbinden des Zwischenkreis-Hohlkörpers 19 mit einem Endabschnitt des Außen-Hohlkörpers 54 und zum Verbinden des Laugenkreis-Hohlkörpers 28 mit einem Endabschnitt des Innen-Hohlkörpers 55 konfiguriert ist.

Mit anderen Worten kann die Geschirrspülmaschine 2 einen Koaxial-Wärmetauscher 23 zur Systemtrennung zwischen Laugenkreis 25 und sekundärem Zwischenkreislauf 17 beinhalten.

Die mittels der Wärmepumpe 1 zu erwärmende Spülflüssigkeit 24 kann ist mit Spülchemie und Schmutzpartikeln versetzt / verunreinigt und soll nicht direkt mit den Wärmetauschern des Kältekreises 6 der Wärmepumpe 1 in Verbindung kommen, damit diese nicht verstopft bzw. chemisch angegriffen werden. Aus diesem Grund wird die zur Beheizung des Spültanks 26 von der Wärmepumpe 7 über den Verflüssiger 9 bereitgestellte Wärmeenergie zuerst auf ein sekundäres Fluid 18 übertragen welches durch die Zwischenkreis-Pumpe 22 anschließend zu einem Koaxial-Wärmetauscher 23 gefördert wird, der eine Systemtrennung vom sekundären Zwischenkreislauf 17 zum Laugenkreis 25 bildet. So kann keine aggressive Spülflüssigkeit 24 in den sekundären Zwischenkreislauf 17 gelangen. Im Koaxial-Wärmetauscher 23 wird im Gegenstrom das sekundäre Fluid 18 abgekühlt und die Spülflüssigkeit 24 erwärmt. Das abgekühlte sekundäre Fluid 18 wird dann über einen Vorlagebehälter 21 wieder von der Zwischenkreis-Pumpe 22 angesaugt und erneut zum Verflüssiger 9 gefördert. Der sekundäre Zwischenkreislauf 17 ist somit in sich geschlossen, aber zum Spülmaschineninnenraum 20 über einen Überlaufschlauch 30 verbunden, weshalb sich im Vorlagebehälter 21 des sekundären Zwischenkreislaufes 17 kein Überdruck gegenüber der Atmosphäre des Spülmaschineninnenraums 20 und somit des Aufstellraums 45 der Spülmaschine 2 bildet.

Der Koaxial-Wärmetauscher 23 besteht im Wesentlichen aus einem in einem Schlauch 54 befindlichen Wellrohr 55, sowie zwei speziellen T-Stücken 56 am Anfang und Ende des Koaxial-Wärmetauschers 23 an welchen sowohl Wellrohr 55 als auch Schlauch 54 dicht befestigt sind.

Die mit Spülchemie und Schmutzpartikeln versetzte und zu erwärmende Spülflüssigkeit 24 fließt über die geraden Anschlüsse des T-Stücks 56 durch das Wellrohr 55. Im Gegenstrom fließt das sich abkühlende sekundäre Fluid 18 im sich zwischen Wellrohr 55 und Schlauch 54 bildenden Ringspalt 59.

Die Abdichtung des Schlauches 54 jeweils am T-Stück 56 ein- und ausgangsseitig des Koaxial-Wärmetauschers 23 erfolgt mittels Schlauchtüllen 57 und Schlauchschellen 58, wobei die Schlauchtüllen 57 jeweils in die T-Stücke 56 gesteckt und mit diesen verpresst werden. Die Verpressung zwischen T-Stück 56 und Schlauchtülle 57 wird durch einen in der Verpressung befindlichen O-Ring 60 entsprechend abgedichtet.

Die Verbindung des Wellrohrs 55 mit der Schlauchtülle des Spülflüssigkeitsein- bzw. Austritts 61 weist das Merkmal auf, dass die Schlauchtülle 61 derart beschaffen ist, dass sie sowohl im T-Stück 56 wie bereits oben beschrieben verpresst werden kann, als auch eine Aufnahme 62 für das Wellrohr 55 enthält, in die das Wellrohr bis zu einem Anschlag 63 eingesteckt werden kann. Die Abdichtung zwischen Aufnahme 62 und Wellrohr 55 erfolgt mittels dreier speziell an den Wellrohrdurchmesser angepasster O-Ringe 64 in den ersten drei Wellen des Wellrohrs 55, welche beim Verpressen der Aufnahme 62 mit dem Wellrohr 55 so verformt werden, dass sie die Wellen vollständig auffüllen und eine dichte Verbindung mit der Aufnahme 62 herstellen. Das Verpressen der Aufnahme 62 reduziert den Durchmesser der Aufnahme 62 nur so weit, dass die O-Ringe 64 dicht an Wellrohr 55 und Aufnahme 62 anliegen, aber das Wellrohr 55 dabei nicht beschädigt wird. Des Weiteren wird gemäß einem Aspekt der vorliegenden Erfindung beim Verpressen der Aufnahme 62 zwischen dieser und der vierten Welle des Wellrohrs 55 ein Formschluss hergestellt, so dass das Wellrohr 55 auch bei Zugbelastung des Wellrohrs nicht aus der Aufnahme 62 herausgezogen werden kann. Die Schlauchtülle 61 ist zudem derart beschaffen, dass ihr Innendurchmesser sich bis zum Anschlag 63 des Wellrohrs 55 stetig reduziert, damit die Strömung der Spülflüssigkeit 24 einen geringen Druckverlust an dieser Stelle erfährt. Die beschriebenen Verbindungen von Wellrohr 55 mit Schlauchtülle 61 ist auf der Ein- und Austrittsseite der Spülflüssigkeit 24 des Koaxial-Wärmetauschers 23 identisch.

Der Ein- und Austritt des sekundären Fluids 18 erfolgt jeweils über den Seitenanschluss 65 der T-Stücke 56 ebenfalls wieder über eine Schlauchtülle 78, die mittels Verpressung mit einem O-Ring 60 dicht und fest mit dem T-Stück 56 verbunden wird.

Wie insbesondere in Fig. 1 bis Fig. 5 zu sehen ist, kann der Laugenkreislauf 25 einen Spültank 26 umfassen; wobei die Geschirrspülmaschine 2 so konfiguriert ist, dass sie vor Beginn eines Spülvorgangs den Spültank 26 mit vorgewärmter Spülflüssigkeit 24 befüllt; und wobei die Geschirrspülmaschine 2 so konfiguriert ist, dass sie einen Vorwärmprozess ausführt, wobei der Vorwärmprozess umfasst: Aktivieren der Laugenkreis-Pumpe 27 und der Zwischenkreis-Pumpe 22 zu einem Vorwärm-Startzeitpunkt zum Vorwärmen des Kältemittels 16 in dem Verflüssiger 9 mittels der vorgewärmten Spülflüssigkeit; und Aktivieren des Verdichters 8 nach Ablauf einer vorbestimmten Vorwärm-Zeitspanne ab dem Vorwärm-Startzeitpunkt. Die Geschirrspülmaschine 2 kann so konfiguriert sein, dass sie den Vorwärmprozess nicht ausführt, wenn ein Verflüssigungsdruck des Kältemittels 16 einen Minimal-Verflüssigungsdruck überschreitet.

Mit anderen Worten kann die Geschirrspülmaschine 2 einen Verflüssiger 9 beinhalten, der vor einem Kaltstart der Wärmepumpe 1 beim Füllen der Spülmaschine 2 vorgeheizt werden kann.

Da die gewerbliche Transportspülmaschine 2 mit Wärmepumpe 1 auch bei kühlen Umgebungs- und Aufstellbedingungen sicher gestartet und betrieben werden muss, wird gemäß einem Aspekt der vorliegenden Erfindung ein Vorheizprozess für den Verflüssiger 9 der Wärmepumpe 1 in die Spülmaschinensteuereinheit implementiert.

Hintergrund dafür ist, dass bei komplett kaltem Kältekreis 6 beim Start des Verdichters 8 noch kein oder nur ein geringer Verflüssigungsdruck, gemessen durch den Hochdrucksensor 13 vorhanden ist bzw. vom Verdichter 8 aufgebaut wurde, so dass aufgrund dessen noch wenig Kältemittel 16 durch das elektronische Expansionsventil 11 strömt. Da der Verdichter 8 bereits Kältemittel 16 aus dem Verdampfer 7 absaugt, aber gleichzeitig noch wenig Kältemittel 16 vom Expansionsventil 11 in den Verdampfer 7 eingespritzt wird, sinkt der Druck im Verdampfer 7 ab und kann gegebenenfalls eine untere Abschaltschwelle unterschreiten, die zu einem Ausschalten des Verdichters 8 führt.

Beim ersten Start der Wärmepumpe 1, während die Spülmaschine 2 mit im Boiler 48 vorgeheiztem Wasser befüllt wird, noch vor dem Einschalten des Verdichters 8 wird die Tankumwälzpumpe 27 gleichzeitig mit der Zwischenkreis-Pumpe 22 für eine vordefinierte Zeit gestartet. Dadurch wird bereits vorgewärmte Spülflüssigkeit 24 aus dem Spültank 26 zum Koaxial-Wärmetauscher 23 gefördert, welche in diesem dann im Gegenstrom das sekundäre Fluid 18 des sekundären Zwischenkreises 17 erwärmt. Das sekundäre Fluid 18 erwärmt wiederrum den Verflüssiger 9 und das in diesem ebenfalls enthaltene Kältemittel 16. Durch die Erwärmung des Kältemittels 16 im Verflüssiger 9 steigt der Druck des Kältemittels 16 auf der Hochdruckseite der Wärmepumpe 1 an und die Wärmepumpe 1 kann beim Einschalten des Verdichters 8, nach Ablauf einer definierten Vorwärmzeit, gleich von Beginn an durch den anliegenden Druck des Kältemittels stromaufwärts des elektronischen Expansionsventils 11 und einen daraus resultierenden Kältemittelstrom ohne stärkeres Absinken des Verdampfungsdrucks des Kältemittels 16 im Verdampfer 7 starten, ohne dass eine Störung infolge zu geringen Verdampfungsdrucks des Kältemittels 16 im Verdampfer 7 auftritt.

Dieser Vorwärmprozess wird immer nur dann ausgeführt, wenn die Spülmaschine 2 neu mit Wasser befüllt wird. In einer weiteren Ausprägung wird der Vorwärmprozess des Verflüssigers 9 ferner nur dann ausgeführt, wenn der mittels Hochdrucksensor 13 gemessene Verflüssigungsdruck bzw. der daraus ermittelten Verflüssigungstemperatur des Kältemittels 16 einen definierten Wert unterschreitet. Dadurch können unnötige Vorwärmprozesse und dadurch eine unnötige Senkung der Gesamteffizienz der Spülmaschine 2 mit Wärmepumpe 1 vermieden werden, sollte der Verflüssiger 9 noch eine ausreichend hohe Temperatur aufweisen.

Wie insbesondere in Fig. 1 bis Fig. 5 zu sehen ist, kann der Zwischenkreislauf 17 einen Vorlagebehälter 21 zur Aufnahme des Zwischenfluids 18 umfassen, wobei der Vorlagebehälter 21 in Bezug auf eine Stromrichtung des Zwischenfluids 18 stromaufwärts der Zwischenkreis-Pumpe 22 angeordnet ist. Der Zwischenkreis-Hohlkörper 19 kann einen Einström-Abschnitt umfassen, der in Bezug auf eine Stromrichtung des Zwischenfluids 18 stromaufwärts des Vorlagebehälters 21 angeordnet ist und mit dem Vorlagebehälter 21 verbunden ist, so dass das Zwischenfluid 18 durch den Einström-Abschnitt in den Vorlagebehälter 21 einströmen kann, wobei eine Querschnittsfläche des Vorlagebehälters 21 senkrecht zu einer Stromrichtung des Zwischenfluids 18 durch den Vorlagebehälter 21 größer ist als eine Querschnittsfläche des Einström-Abschnitts senkrecht zu einer Stromrichtung des Zwischenfluids 18 durch den Einström-Abschnitt. Der Laugenkreislauf 25 kann einen Spültank 26 umfassen; wobei die Geschirrspülmaschine 2 so konfiguriert ist, dass sie vor Beginn eines Spülvorgangs den Spültank 26 mit Spülflüssigkeit 24 befüllt; und wobei die Geschirrspülmaschine 2 so konfiguriert ist, dass sie einen Wärmprozess zum Erwärmen der Spülflüssigkeit 24 in dem Spültank 26 ausführt, wobei der Wärmprozess umfasst: Aktivieren des Verdichters 8 und der Zwischenkreis-Pumpe 22 zu einem ersten Zeitpunkt zum Erhöhen einer Temperatur des Zwischenfluids 18; und Aktivieren der Laugenkreis-Pumpe 27 zu einem zweiten Zeitpunkt nach dem ersten Zeitpunkt, wenn eine Differenz zwischen der Temperatur des Zwischenfluids 18 und einer Temperatur der Spülflüssigkeit 24 in dem Spültank 26 einen vorbestimmten Wert überschreitet. Der Zwischenkreislauf kann einen Temperatursensor 47 umfassen, der in Bezug auf eine Stromrichtung des Zwischenfluids zwischen dem Verflüssiger 9 und dem Koaxialwärmetauscher 23 angeordnet ist und zur Erfassung der Temperatur des Zwischenfluids 18 konfiguriert ist.

Mit anderen Worten kann die Geschirrspülmaschine einen sekundären Zwischenkreislauf 17 mit Vorlagebehälter 21 und Zwischenkreistemperaturfühler 47 am Austritt des sekundären Fluids 18 am Verflüssiger 9 beinhalten.

Der sekundäre Zwischenkreislauf 17 enthält wie bereits beschrieben einen Vorlagebehälter 21 mit definierter Höhe und definiertem Durchmesser, um für die Zwischenkreis-Pumpe 22 eine gewisse Wasservorlage zu gewährleisten. Dies verhindert oder minimiert das Risiko von Kavitation in der Zwischenkreis-Pumpe 22 und macht gewisse Verluste von sekundärem Fluid 18, z. B. in Folge von geringer Leckage oder durch geringes Abfließen von sekundärem Fluid 18 über den Überlaufschlauch 30, tolerierbar, ohne dass die Zwischenkreis-Pumpe 22 Luft ansaugt und der Volumenstrom im sekundären Zwischenkreislauf 17 zum Erliegen kommt. Dazu ist der Vorlagebehälter 21 am höchsten Punkt im Wärmepumpengehäuse 15 angebracht, was zusätzlich die Entlüftung des sekundären Zwischenkreislaufs 17 ermöglicht, da das in den oberen Bereich des Vorlagebehälters 21 einströmende sekundäre Fluid 18 durch die Querschnittserweiterung im Vorlagebehälter 21 langsamer strömt und dadurch im sekundären Fluid 18 enthaltene Gas-/Luftblasen leichter im Vorlagebehälter 21 nach oben aufsteigen können. Abgeschiedene Gas-/Luftblasen werden dann über den Überlaufschlauch 30 in den Maschineninnenraum 20 entlüftet.

Des Weiteren enthält der sekundäre Zwischenkreislauf 17 kurz nach Austritt des sekundären Fluids 18 aus dem Verflüssiger 9 einen Zwischenkreistemperaturfühler 47, der die Temperatur des sekundären Fluids misst und zur Spülmaschinensteuereinheit überträgt. Ist die Wärmepumpe 1 im regulären Betrieb, d. h. der bereits beschriebene Vorwärmprozess ist nicht aktiv, erwärmt sie über den Verflüssiger 9 das im sekundären Zwischenkreislauf 17 mittels der Zwischenkreis-Pumpe 22 geförderte sekundäre Fluid 18 gemäß einem Aspekt der vorliegenden Erfindung so lange, ohne dass die Tankumwälzpumpe 27 aktiviert wird, bis die Temperatur des sekundären Fluids 18, gemessen mittels des Zwischenkreistemperaturfühlers 47, um einen definierte Temperaturdifferenz höher ist als die Temperatur der Spülflüssigkeit 24 im Spültank 26, welche mittels eines Temperaturfühlers gemessen wird. Erst dann wird die Tankumwälzpumpe 27 aktiviert und infolgedessen Spülflüssigkeit 24 vom Spültank 26 zum Koaxial-Wärmetauscher 23 gefördert, welche dort aufgrund der im Vergleich zur Temperatur der Spülflüssigkeit 24 höheren Temperatur des sekundären Fluids 18 erwärmt wird. Vorbeschriebener Prozess sorgt also gemäß einem Aspekt der vorliegenden Erfindung dafür, dass so lange das sekundäre Fluid 18 im sekundären Zwischenkreislauf 17 keine höhere Temperatur aufweist als die Spülflüssigkeit 24 im Spültank 26 die Tankumwälzpumpe 27 deaktiviert bleibt. Wäre dies nicht der Fall, d. h. vorgenannter Prozess nicht implementiert, und die Tankumwälzpumpe 27 würde gleichzeitig mit der Wärmepumpe 1 aktiviert, welche aber ggf. noch eine geringere Temperatur des sekundären Fluids 18 im sekundären Zwischenkreislauf 17 aufweist als die Temperatur der Spülflüssigkeit 24 im Spültank 26, würde dem Spültank 26 unnötig für den Spülprozess benötigte Wärme entzogen und an das sekundäre Fluid 18 übertragen. Die Wärmepumpe 1 soll also nach deren Start zuerst sich selbst und das sekundäre Fluid 18 im sekundären Zwischenkreislauf 17 so weit erwärmen, bis eine Wärmeabgabe über den Koaxial-Wärmetauscher 23 an die Spülflüssigkeit 24 möglich und sinnvoll ist.

Wie insbesondere in Fig. 1 bis Fig. 5 zu sehen ist, kann die Geschirrspülmaschine 2 so konfiguriert sein, dass sie den Wärmprozess sowohl während des Befüllens des Spültanks 26 mit Spülflüssigkeit 24 als auch während des Spülvorgangs ausführt. Die Geschirrspülmaschine 2 kann so konfiguriert sein, dass sie den Wärmprozess ausführt, wenn ein Wasserstand der Spülflüssigkeit 24 in dem Spültank 26 einen Minimal-Wasserstand überschreitet. Die Geschirrspülmaschine 2 kann ferner so konfiguriert sein, dass sie den Vorwärmprozess während des Befüllens des Spültanks 26 mit Spülflüssigkeit 24 ausführt; wobei vorzugsweise die Geschirrspülmaschine 2 so konfiguriert ist, dass sie den Vorwärmprozess ausführt, wenn ein Wasserstand der Spülflüssigkeit 24 in dem Spültank 26 einen Minimal-Wasserstand überschreitet.

Mit anderen Worten kann die Geschirrspülmaschine einen Spültank 26 beinhalten, wobei die Spülflüssigkeit 24 im Spültank 26 während des Befüllens der Spülmaschine 2 mit Wasser beheizt werden kann.

Um bereits während des Befüllens des Spültanks 26 der Spülmaschine 2 mit Spülflüssigkeit 24 diese effizient mittels der Wärmepumpe 1 über den sekundären Zwischenkreislauf 17 und Laugenkreis 25 beheizen zu können, wird nach Überschreitung eines definierten Füllstands der Spülflüssigkeit 24 im Spültank 26 die Wärmepumpe 1 aktiviert. Zeitgleich zur Wärmepumpe 1 wird auch die Zwischenkreis-Pumpe 22 aktiviert sowie ggf. wie bereits beschrieben ebenfalls die Tankumwälzpumpe 27 sofern ein Vorheizprozess für den Verflüssiger 9 der Wärmepumpe 1 sinnvoll ist.

Das Überschreiten des definierten Füllstands der Spülflüssigkeit 24 im Spültank 26 ist deswegen als Kriterium zum Einschalten der Wärmepumpe 1 vorteilhaft, da erst dann die Tankumwälzpumpe 27 sicher betrieben werden kann ohne dass diese Luft ansaugt, bzw. kavitiert.

Das Beheizen der Spülflüssigkeit 24 im Spültank 26 durch die Wärmepumpe 1 während des Befüllens der Spülmaschine 2, also noch vor der Spülprozess der Spülmaschine 2 startet, erfolgt zum Großteil unter Nutzung der in der Raumluft 4 des Aufstellungsraums 45 enthaltenen Energie, da noch kein oder nur eine geringe Menge an Wrasen durch das Luftsystem 33 angesaugt und im Verdampfer 7 genutzt werden kann und ist dadurch deutlich effizienter als wenn die Beheizung der Spülflüssigkeit 24 ausschließlich über im Spültank 26 eingebaute elektrische Heizkörper erfolgen würde.

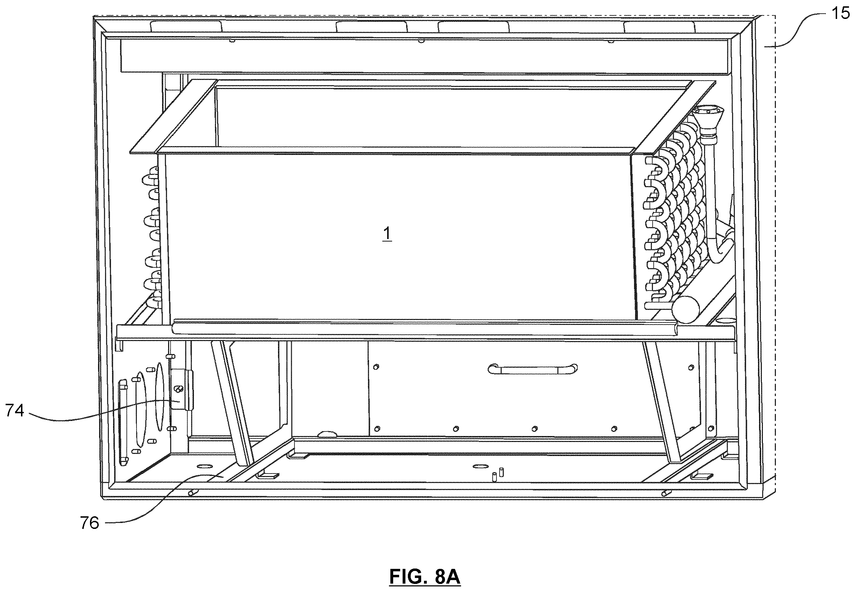

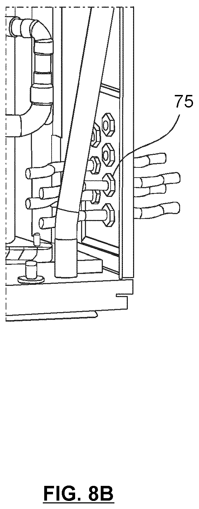

Wie insbesondere in Fig. 8A und Fig. 8B zu sehen ist, kann die Wärmepumpe 1 schnell gewechselt werden, z. B. im Fehlerfall, durch wenige zu lösende Verbindungen mittels Herausziehen / Einschieben der kompletten Wärmepumpe 1.

Die gesamte Wärmepumpe 1 kann z. B. im Fehlerfall ohne Eingriff in den Kältekreis 6 mit wenigen Handgriffen aus- und wieder eingebaut werden. Dazu sind lediglich vier Befestigungswinkel 74 zu entfernen, die Elektrostecker 75 zwischen Wärmepumpe 1 und Spülmaschinensteuereinheit zu lösen, je ein Schlauch saugseitig der Zwischenkreis-Pumpe 22 und am Austritt des sekundären Fluids 18 oben am Verflüssiger 9 zu lösen, sowie die beiden Schläuche des Nachspülsystems 94 am Unterkühler 10 abzunehmen.

Die Wärmepumpe 1 kann nun über Schiebeschienen 76 aus dem Wärmepumpengehäuse 15 herausgezogen werden. Alle anderen nicht zu lösenden Verbindungen und Bauteile sind so angeordnet, dass sie beim Ein-/Ausbau der Wärmepumpe 1 an Ort und Stelle verbleiben können. Der Wiedereinbau der Wärmepumpe 1 erfolgt in umgekehrter Reihenfolge.

### Liste der Bezugszeichen

- 1: Wärmepumpenvorrichtung, Wärmepumpe
- 2: Geschirrspülmaschine, Transportgeschirrspülmaschine
- 3: Maschinenluft, Maschinenabluft, Wrasen
- 4: Umgebungsluft, Raumluft
- 5: Spülgut, Geschirr
- 6: Kältekreislauf, Kältekreis
- 7: Verdampfer
- 8: Verdichter
- 9: Verflüssiger
- 10: Unterkühler
- 11: Expansionsventil
- 12: Kältekreis-Rohrleitungen
- 13: Hochdrucksensor
- 14: Niederdrucksensor
- 15: Wärmepumpengehäuse
- 16: Kältemittel
- 17: Zwischenkreislauf, sekundärer Zwischenkreislauf
- 18: Zwischenfluid, sekundäres Fluid
- 19: Zwischenkreis-Hohlkörper
- 20: Spülmaschineninnenraum
- 21: Vorlagebehälter
- 22: Zwischenkreis-Pumpe
- 23: Koaxialwärmetauscher
- 24: Spülflüssigkeit
- 25: Laugenkreislauf, Laugenkreis
- 26: Spültank
- 27: Laugenkreis-Pumpe, Tankumwälzpumpe
- 28: Laugenkreis-Hohlkörper
- 29: Zwischenkreis-Füllventil
- 30: Überlaufschlauch
- 31: Spülzone, Nachspülzone
- 33: Luftsystem
- 34: Erster Ansaugbereich
- 35: Geschirreinlassseite
- 37: Geschirrauslassseite
- 38: Zusätzliche Raumluftansaugung
- 39: Fortluftventilator
- 40: System aus Luftrohren
- 42: Ventilatorgehäuse
- 43: Luftgemisch, Raumluft-/Wrasengemisch
- 44: Öffnungen im Ventilatorgehäuse
- 45: Umgebungsbereich, Aufstellraum
- 46: Filtereinheit, Fettfilter
- 47: Temperatursensor, Zwischenkreistemperaturfühler
- 48: Boiler
- 49: Nachspülpumpe
- 50: Wassernetztrenner, Airgap
- 51: Spülzone, Vorspülzone
- 52: Spülzone, Hauptspülzone
- 53: Trockenzone
- 54: Außen-Hohlkörper, Schlauch
- 55: Innen-Hohlkörper, Wellrohr
- 56: Hohlkörper-Verbindungsteil, T-Stück
- 56a: Erster Verbindungsabschnitt
- 56b: Zweiter Verbindungsabschnitt
- 56c: Dritter Verbindungsabschnitt
- 57: Dritte Tülle, Schlauchtülle
- 57a: Erster Endabschnitt der dritten Tülle
- 57b: Zweiter Endabschnitt der dritten Tülle
- 58: Schlauchschelle
- 59: Hohlraum, Ringspalt
- 60: O-Ring
- 61: Zweite Tülle, Schlauchtülle des Spülflüssigkeitsein- bzw. Austritts
- 61a: Erster Endabschnitt der zweiten Tülle
- 61c: Mittenabschnitt der zweiten Tülle
- 61b: Endabschnitt der zweiten Tülle
- 62: Aufnahmeabschnitt, Aufnahme
- 63: Anschlag
- 64: O-Ring für Wellrohr
- 65: Seitenanschluss
- 66: Fortluft
- 74: Befestigungswinkel
- 75: Elektrostecker
- 76: Schiebeschienen
- 77: Vorsprung, Vierte Wellrohrwelle für Formschluss
- 78: Erste Tülle, Schlauchtülle
- 78a: Erster Endabschnitt der ersten Tülle
- 78b: Zweiter Endabschnitt der ersten Tülle
- 91: Zulaufwasser
- 92: Abwasser
- 93: Nachspülflüssigkeit
- 94: Nachspülsystem
- 95: Transportvorrichtung
- 96: Gebläse

## Patentansprüche

1. Geschirrspülmaschine (2), welche umfasst:
einen Kältekreislauf (6), der einen Kältekreis-Hohlkörper (12) zum Aufnehmen eines Kältemittels (16) und einen Verdichter (8) zum Verdichten des Kältemittels (16) und zum Fördern des Kältemittels (16) durch den Kältekreis-Hohlkörper (12) umfasst;
einen Zwischenkreislauf (17), der einen Zwischenkreis-Hohlkörper (19) zum Aufnehmen eines Zwischenfluids (18) und eine Zwischenkreis-Pumpe (22) zum Fördern des Zwischenfluids (18) durch den Zwischenkreis-Hohlkörper (19) umfasst; und
einen Laugenkreislauf (25), der einen Laugenkreis-Hohlkörper (28) zum Aufnehmen einer Spülflüssigkeit (24) und eine Laugenkreis-Pumpe (27) zum Fördern der Spülflüssigkeit (24) durch den Laugenkreis-Hohlkörper (28) umfasst;
wobei der Kältekreislauf (6) einen Verflüssiger (9) umfasst, der zum Übertragen von Wärme von dem Kältemittel (16) auf das Zwischenfluid (18) konfiguriert ist;
wobei die Geschirrspülmaschine (2) einen Koaxialwärmetauscher (23) umfasst, der zum Übertragen von Wärme von dem Zwischenfluid (18) auf die Spülflüssigkeit (24) konfiguriert ist, wobei der Koaxialwärmetauscher (23) einen Außen-Hohlkörper (54) und einen Innen-Hohlkörper (55), der innerhalb des Außen-Hohlkörpers (54) angeordnet ist, umfasst, wobei der Innen-Hohlkörper (55) zum Aufnehmen der Spülflüssigkeit (24) konfiguriert ist, wobei ein Hohlraum (59) zwischen dem Außen-Hohlkörper (54) und dem Innen-Hohlkörper (55) zum Aufnehmen des Zwischenfluids (18) konfiguriert ist;
wobei die Geschirrspülmaschine (2) eine Verbindungseinheit umfasst, die zum Verbinden des Zwischenkreis-Hohlkörpers (19) mit dem Außen-Hohlkörper (54) und zum Verbinden des Laugenkreis-Hohlkörpers (28) mit dem Innen-Hohlkörper (55) konfiguriert ist;
wobei die Verbindungseinheit ein Hohlkörper-Verbindungsteil (56) mit einem ersten Verbindungsabschnitt (56a), einem zweiten Verbindungsabschnitt (56b) und einem dritten Verbindungsabschnitt (56c) sowie eine erste Tülle (78), eine zweite Tülle (61) und eine dritte Tülle (57) umfasst;
wobei die erste Tülle (78) zum Verbinden des ersten Verbindungsabschnitts (56a) mit dem Zwischenkreis-Hohlkörper (19) konfiguriert ist;
wobei die zweite Tülle (61) zum Verbinden des zweiten Verbindungsabschnitts (56b) mit dem Laugenkreis-Hohlkörper (28) konfiguriert ist und zum Verbinden des zweiten Verbindungsabschnitts (56b) mit dem Innen-Hohlkörper (55) konfiguriert ist, wobei die zweite Tülle (61) einen Aufnahmeabschnitt (62) zur Aufnahme des Innen-Hohlkörpers (55) umfasst; und
wobei die dritte Tülle (57, 57a, 57b) zum Verbinden des dritten Verbindungsabschnitts (56c) mit dem Außen-Hohlkörper (54) konfiguriert ist,
wobei der Innen-Hohlkörper (55) als ein Wellrohr (55) mit ein oder mehreren Wellen ausgebildet ist, wobei der Aufnahmeabschnitt (62) der zweiten Tülle (61) über einen oder mehrere O-Ringe (64), die jeweils in einer entsprechenden Welle des Wellrohrs angeordnet sind, mit dem Wellrohr verpresst ist.

2. Geschirrspülmaschine (2) nach Anspruch 1, wobei das Hohlkörper-Verbindungsteil (56) T-förmig ausgebildet ist, wobei der zweite Verbindungsabschnitt (56b) und der dritte Verbindungsabschnitt (56c) parallel angeordnet sind und der erste Verbindungsabschnitt (56a) senkrecht zu dem zweiten Verbindungsabschnitt (56b) und dem dritten Verbindungsabschnitt (56c) angeordnet ist.

3. Geschirrspülmaschine (2) nach einem der vorhergehenden Ansprüche, wobei der Aufnahmeabschnitt (62) einen Vorsprung (77) aufweist, der formschlüssig in eine Welle des Wellrohrs eingreift.

4. Geschirrspülmaschine (2) nach einem der vorhergehenden Ansprüche, wobei ein Innendurchmesser der zweiten Tülle (61, 61a-c) von einem Mittenabschnitt der zweiten Tülle (61, 61a-c) zu dem Aufnahmeabschnitt (62) hin abnimmt.

5. Geschirrspülmaschine (2) nach einem der vorhergehenden Ansprüche, wobei die Verbindungseinheit zum Verbinden des Zwischenkreis-Hohlkörpers (19) mit einem Anfangsabschnitt des Außen-Hohlkörpers (54) und zum Verbinden des Laugenkreis-Hohlkörpers (28) mit einem Anfangsabschnitt des Innen-Hohlkörpers (55) konfiguriert ist, wobei die Geschirrspülmaschine (2) eine weitere Verbindungseinheit umfasst, die zum Verbinden des Zwischenkreis-Hohlkörpers (19) mit einem Endabschnitt des Außen-Hohlkörpers (54) und zum Verbinden des Laugenkreis-Hohlkörpers (28) mit einem Endabschnitt des Innen-Hohlkörpers (55) konfiguriert ist.

6. Geschirrspülmaschine (2) nach einem der vorhergehenden Ansprüche, wobei der Zwischenkreislauf (17) einen Vorlagebehälter (21) zur Aufnahme des Zwischenfluids (18) umfasst, wobei der Vorlagebehälter (21) in Bezug auf eine Stromrichtung des Zwischenfluids (18) stromaufwärts der Zwischenkreis-Pumpe (22) angeordnet ist.

7. Geschirrspülmaschine (2) nach Anspruch 6, wobei der Zwischenkreis-Hohlkörper (19) einen Einström-Abschnitt umfasst, der in Bezug auf eine Stromrichtung des Zwischenfluids (18) stromaufwärts des Vorlagebehälters (21) angeordnet ist und mit dem Vorlagebehälter (21) verbunden ist, so dass das Zwischenfluid (18) durch den Einström-Abschnitt in den Vorlagebehälter (21) einströmen kann, wobei eine Querschnittsfläche des Vorlagebehälters (21) senkrecht zu einer Stromrichtung des Zwischenfluids (18) durch den Vorlagebehälter (21) größer ist als eine Querschnittsfläche des Einström-Abschnitts senkrecht zu einer Stromrichtung des Zwischenfluids (18) durch den Einström-Abschnitt.

8. Geschirrspülmaschine (2) nach einem der vorhergehenden Ansprüche, wobei der Laugenkreislauf (25) einen Spültank (26) umfasst;
wobei die Geschirrspülmaschine (2) so konfiguriert ist, dass sie vor Beginn eines Spülvorgangs den Spültank (26) mit Spülflüssigkeit (24) befüllt; und
wobei die Geschirrspülmaschine (2) so konfiguriert ist, dass sie einen Wärmprozess zum Erwärmen der Spülflüssigkeit (24) in dem Spültank (26) ausführt, wobei der Wärmprozess umfasst:
- Aktivieren des Verdichters (8) und der Zwischenkreis-Pumpe (22) zu einem ersten Zeitpunkt zum Erhöhen einer Temperatur des Zwischenfluids (18); und
- Aktivieren der Laugenkreis-Pumpe (27) zu einem zweiten Zeitpunkt nach dem ersten Zeitpunkt, wenn eine Differenz zwischen der Temperatur des Zwischenfluids (18) und einer Temperatur der Spülflüssigkeit (24) in dem Spültank (26) einen vorbestimmten Wert überschreitet.

9. Geschirrspülmaschine (2) nach Anspruch 8, wobei der Zwischenkreislauf einen Temperatursensor (47) umfasst, der in Bezug auf eine Stromrichtung des Zwischenfluids zwischen dem Verflüssiger (9) und dem Koaxialwärmetauscher (23) angeordnet ist und zur Erfassung der Temperatur des Zwischenfluids (18) konfiguriert ist.

10. Geschirrspülmaschine (2) nach Anspruch 8 oder 9, wobei die Geschirrspülmaschine (2) so konfiguriert ist, dass sie den Wärmprozess sowohl während des Befüllens des Spültanks (26) mit Spülflüssigkeit (24) als auch während des Spülvorgangs ausführt.

11. Geschirrspülmaschine nach Anspruch 10, wobei die Geschirrspülmaschine (2) so konfiguriert ist, dass sie den Wärmprozess ausführt, wenn ein Wasserstand der Spülflüssigkeit (24) in dem Spültank (26) einen Minimal-Wasserstand überschreitet.

12. Geschirrspülmaschine (2) nach einem der vorhergehenden Ansprüche, wobei der Laugenkreislauf (25) einen Spültank (26) umfasst;
wobei die Geschirrspülmaschine (2) so konfiguriert ist, dass sie vor Beginn eines Spülvorgangs den Spültank (26) mit vorgewärmter Spülflüssigkeit (24) befüllt; und
wobei die Geschirrspülmaschine (2) so konfiguriert ist, dass sie einen Vorwärmprozess ausführt, wobei der Vorwärmprozess umfasst:
- Aktivieren der Laugenkreis-Pumpe (27) und der Zwischenkreis-Pumpe (22) zu einem Vorwärm-Startzeitpunkt zum Vorwärmen des Kältemittels (16) in dem Verflüssiger (9) mittels der vorgewärmten Spülflüssigkeit; und
- Aktivieren des Verdichters (8) nach Ablauf einer vorbestimmten Vorwärm-Zeitspanne ab dem Vorwärm-Startzeitpunkt.

13. Geschirrspülmaschine (2) nach Anspruch 12, wobei die Geschirrspülmaschine (2) so konfiguriert ist, dass sie den Vorwärmprozess nicht ausführt, wenn ein Verflüssigungsdruck des Kältemittels (16) einen Minimal-Verflüssigungsdruck überschreitet.

14. Geschirrspülmaschine (2) nach einem der Ansprüche 12 oder 13, wobei die Geschirrspülmaschine (2) so konfiguriert ist, dass sie den Vorwärmprozess während des Befüllens des Spültanks (26) mit Spülflüssigkeit (24) ausführt;
wobei vorzugsweise die Geschirrspülmaschine (2) so konfiguriert ist, dass sie den Vorwärmprozess ausführt, wenn ein Wasserstand der Spülflüssigkeit (24) in dem Spültank (26) einen Minimal-Wasserstand überschreitet.

## Claims

1. Dishwasher (2) which comprises:
a refrigeration circuit (6) which comprises a refrigeration circuit hollow body (12) for accommodating a coolant (16) and a compressor (8) for compressing the coolant (16) and for conveying the coolant (16) through the refrigeration circuit hollow body (12);
an intermediate circuit (17), which comprises an intermediate circuit hollow body (19) for accommodating an intermediary fluid (18) and an intermediate circuit pump (22) for conveying the intermediary fluid (18) through the intermediate circuit hollow body (19); and
a wash liquor circuit (25) which comprises a wash liquor hollow body (28) for accommodating a washing liquid (24) and a wash liquor pump (27) for conveying the washing liquid (24) through the wash liquor circuit hollow body (28);
wherein the refrigeration circuit (6) comprises a condenser (9), which is configured for transferring heat from the coolant (16) to the intermediary fluid (18);
wherein the dishwasher (2) comprises a coaxial heat exchanger (23), which is configured for transferring heat from the intermediary fluid (18) to the washing liquid (24), wherein the coaxial heat exchanger (23) comprises an outer hollow body (54) and an inner hollow body (55) which is arranged within the outer hollow body (54), wherein the inner hollow body (55) is configured for accommodating the washing liquid (24), wherein a cavity (59) between the outer hollow body (54) and the inner hollow body (55) is configured for accommodating the intermediary fluid (18);
wherein the dishwasher (2) comprises a connection unit which is configured for connecting the intermediate circuit hollow body (19) to the outer hollow body (54) and for connecting the wash liquor circuit hollow body (28) to the inner hollow body (55);
wherein the connection unit comprises a hollow body connecting part (56) with a first connecting portion (56a), a second connecting portion (56b), and a third connecting portion (56c), as well as a first fitting (78), a second fitting (61), and a third fitting (57);
wherein the first fitting (78) is configured for connecting the first connecting portion (56a) to the intermediate circuit hollow body (19);
wherein the second fitting (61) is configured for connecting the second connecting portion (56b) to the wash liquor circuit hollow body (28) and for connecting the second connecting portion (56b) to the inner hollow body (55), wherein the second fitting (61) comprises a receiving portion (62) for receiving the inner hollow body (55); and
wherein the third fitting (57, 57a, 57b) is configured for connecting the third connecting portion (56c) to the outer hollow body (54),
wherein the inner hollow body (55) is designed as a corrugated tube (55) with one or more corrugations, wherein the receiving portion (62) of the second fitting (61) is pressed to the corrugated tube via one or more O rings (64), which are respectively arranged in a corresponding corrugation of the corrugated tube.

2. Dishwasher (2) according to claim 1, wherein the hollow body connecting part (56) is designed as T-shaped, wherein the second connecting portion (56b) and the third connecting portion (56c) are arranged in parallel, and the first connecting portion (56a) is arranged perpendicular to the second connecting portion (56b) and to the third connecting portion (56c).

3. Dishwasher (2) according to one of the preceding claims, wherein the receiving portion (62) has a projection (77) which engages positively into a corrugation of the corrugated tube.

4. Dishwasher (2) according to one of the preceding claims, wherein an inner diameter of the second fitting (61, 61a-c) decreases from a middle section of the second fitting (61, 61a-c) to the receiving portion (62).

5. Dishwasher (2) according to one of the preceding claims, wherein the connection unit is configured for connecting the intermediate circuit hollow body (19) to an initial section of the outer hollow body (54) and for connecting the wash liquor circuit hollow body (28) to an initial section of the inner hollow body (55), wherein the dishwasher (2) comprises a further connection unit, which is configured for connecting the intermediate circuit hollow body (19) to an end section of the outer hollow body (54) and for connecting the wash liquor circuit hollow body (28) to an end section of the inner hollow body (55) .

6. Dishwasher (2) according to one of the preceding claims, wherein the intermediate circuit (17) comprises a storage container (21) for accommodating the intermediary fluid (18), wherein the storage container (21) is arranged upstream of the intermediate circuit pump (22) with respect to a flow direction of the intermediary fluid (18).

7. Dishwasher (2) according to claim 6, wherein the intermediate circuit hollow body (19) comprises an inflow portion, which is arranged upstream of the storage container (21) with respect to a flow direction of the intermediary fluid (18) and is connected to the storage container (21) so that the intermediary fluid (18) may flow in through the inflow portion into the storage container (21), wherein a cross-sectional area of the storage container (21) perpendicular to a flow direction of the intermediary fluid (18) through the storage container (21) is greater than a cross-sectional area of the inflow portion perpendicular to a flow direction of the intermediary fluid (18) through the inflow portion.

8. Dishwasher (2) according to one of the preceding claims, wherein the wash liquor circuit (25) comprises a washing tank (26);
wherein the dishwasher (2) is configured such that it fills the washing tank (26) with washing liquid (24) prior to the beginning of a washing process; and
wherein the dishwasher (2) is configured such that it carries out a heating process for heating the washing liquid (24) in the washing tank (26), wherein the heating process comprises:
- activating the compressor (8) and the intermediate circuit pump (22) at a first time to increase a temperature of the intermediary fluid (18); and
- activating the wash liquor circuit pump (27) at a second time after the first time, if a difference between the temperature of the intermediary fluid (18) and a temperature of the washing liquid (24) in the washing tank (26) exceeds a predetermined value.

9. Dishwasher (2) according to claim 8, wherein the intermediate circuit comprises a temperature sensor (47), which is arranged between the condenser (9) and the coaxial heat exchanger (23) with respect to a flow direction of the intermediary fluid, and is configured for detecting the temperature of the intermediary fluid (18).

10. Dishwasher (2) according to claim 8 or 9, wherein the dishwasher (2) is configured such that it carries out the heating process both during the filling of the washing tank (26) with washing liquid (24) and also during the washing process.

11. Dishwasher according to claim 10, wherein the dishwasher (2) is configured such that it carries out the heating process when a water level of the washing liquid (24) in the washing tank (26) exceeds a minimum water level.

12. Dishwasher (2) according to one of the preceding claims, wherein the wash liquor circuit (25) comprises a washing tank (26);
wherein the dishwasher (2) is configured such that it fills the washing tank (26) with preheated washing liquid (24) prior to the beginning of a washing process; and
wherein the dishwasher (2) is configured such that it carries out a preheating process, wherein the preheating process comprises:
- activating the wash liquor circuit pump (27) and the intermediate circuit pump (22) at a preheating start time for preheating the coolant (16) in the condenser (9) by means of the preheated washing liquid; and
- activating the compressor (8) at the end of a predetermined preheating time period after the preheating start time.

13. Dishwasher (2) according to claim 12, wherein the dishwasher (2) is configured such that it does not carry out the preheating process if a condensing pressure of the coolant (16) exceeds a minimum condensing pressure.

14. Dishwasher (2) according to one of claims 12 or 13, wherein the dishwasher (2) is configured such that it carries out the preheating process during the filling of the washing tank (26) with washing liquid (24);
wherein the dishwasher (2) is preferably configured such that it carries out the preheating process when a water level of the washing liquid (24) in the washing tank (26) exceeds a minimum water level.

## Revendications

1. Lave-vaisselle (2), comprenant :
un circuit frigorifique (6), qui comprend un corps creux de circuit frigorifique (12) pour recevoir un réfrigérant (16) et un compresseur (8) pour comprimer le réfrigérant (16) et pour faire circuler le réfrigérant (16) à travers le corps creux de circuit frigorifique (12) ;
un circuit intermédiaire (17), qui comprend un corps creux de circuit intermédiaire (19) pour recevoir un fluide intermédiaire (18) et une pompe de circuit intermédiaire (22) pour faire circuler le fluide intermédiaire (18) à travers le corps creux de circuit intermédiaire (19) ; et
un circuit de lessive (25), qui comprend un corps creux de circuit de lessive (28) pour recevoir un liquide de lavage (24) et une pompe de circuit de lessive (27) pour faire circuler le liquide de lavage (24) à travers le corps creux de circuit de lessive (28) ;
dans lequel le circuit frigorifique (6) comprend un condenseur (9), qui est conçu pour transférer de la chaleur du réfrigérant (16) au fluide intermédiaire (18) ;
dans lequel le lave-vaisselle (2) comprend un échangeur de chaleur coaxial (23), qui est conçu pour transférer de la chaleur du fluide intermédiaire (18) au liquide de lavage (24), l'échangeur de chaleur coaxial (23) comprenant un corps creux extérieur (54) et un corps creux intérieur (55), qui est disposé à l'intérieur du corps creux extérieur (54), dans lequel le corps creux intérieur (55) est conçu pour recevoir le liquide de lavage (24), une cavité (59) entre le corps creux extérieur (54) et le corps creux intérieur (55) étant conçue pour recevoir le fluide intermédiaire (18) ;
dans lequel le lave-vaisselle (2) comprend une unité de connexion, qui est conçue pour connecter le corps creux de circuit intermédiaire (19) au corps creux extérieur (54) et pour connecter le corps creux de circuit de lessive (28) au corps creux intérieur (55) ;
dans lequel l'unité de connexion comprend une pièce de connexion de corps creux (56) avec une première section de connexion (56a), une deuxième section de connexion (56b) et une troisième section de connexion (56c), ainsi qu'une première douille (78), une deuxième douille (61) et une troisième douille (57) ;
dans lequel la première douille (78) est conçue pour connecter la première section de connexion (56a) au corps creux de circuit intermédiaire (19) ;
dans lequel la deuxième douille (61) est conçue pour connecter la deuxième section de connexion (56b) au corps creux de circuit de lessive (28) et est conçue pour connecter la deuxième section de connexion (56b) au corps creux intérieur (55), dans lequel la deuxième douille (61) comprend une section de réception (62) pour recevoir le corps creux intérieur (55) ; et
dans lequel la troisième douille (57, 57a, 57b) est conçue pour connecter la troisième section de connexion (56c) au corps creux extérieur (54),
dans lequel le corps creux intérieur (55) est conçu comme un tube ondulé (55) avec une ou plusieurs ondulations, la section de réception (62) de la deuxième douille (61) étant pressée avec le tube ondulé via un ou plusieurs joints toriques (64), chacun étant disposé dans une ondulation correspondante du tube ondulé.

2. Lave-vaisselle (2) selon la revendication 1, dans lequel la pièce de connexion de corps creux (56) est de forme en T, dans lequel la deuxième section de connexion (56b) et la troisième section de connexion (56c) sont disposées en parallèle et la première section de connexion (56a) est disposée perpendiculairement à la deuxième section de connexion (56b) et à la troisième section de connexion (56c).

3. Lave-vaisselle (2) selon l'une des revendications précédentes, dans lequel la section de réception (62) présente une saillie (77) qui s'engage de manière complémentaire dans une ondulation du tube ondulé.

4. Lave-vaisselle (2) selon l'une des revendications précédentes, dans lequel un diamètre intérieur de la deuxième douille (61, 61a-c) diminue d'une section médiane de la deuxième douille (61, 61a-c) vers la section de réception (62).

5. Lave-vaisselle (2) selon l'une des revendications précédentes, dans lequel l'unité de connexion est conçue pour connecter le corps creux de circuit intermédiaire (19) à une section de début du corps creux extérieur (54) et pour connecter le corps creux de circuit de lessive (28) à une section de début du corps creux intérieur (55), dans lequel le lave-vaisselle (2) comprend une autre unité de connexion qui est conçue pour connecter le corps creux de circuit intermédiaire (19) à une section de fin du corps creux extérieur (54) et pour connecter le corps creux de circuit de lessive (28) à une section de fin du corps creux intérieur (55).

6. Lave-vaisselle (2) selon l'une des revendications précédentes, dans lequel le circuit intermédiaire (17) comprend un réservoir tampon (21) pour recevoir le fluide intermédiaire (18), dans lequel le réservoir tampon (21) est disposé en amont de la pompe de circuit intermédiaire (22) par rapport à une direction d'écoulement du fluide intermédiaire (18).

7. Lave-vaisselle (2) selon la revendication 6, dans lequel le corps creux de circuit intermédiaire (19) comprend une section d'entrée, qui est disposée en amont du réservoir tampon (21) par rapport à une direction d'écoulement du fluide intermédiaire (18) et est connectée au réservoir tampon (21) de sorte que le fluide intermédiaire (18) peut s'écouler à travers la section d'entrée dans le réservoir tampon (21), dans lequel une surface de section transversale du réservoir tampon (21) perpendiculairement à une direction d'écoulement du fluide intermédiaire (18) à travers le réservoir tampon (21) est supérieure à une surface de section transversale de la section d'entrée perpendiculairement à une direction d'écoulement du fluide intermédiaire (18) à travers la section d'entrée.

8. Lave-vaisselle (2) selon l'une des revendications précédentes, dans lequel le circuit de lessive (25) comprend un réservoir de lavage (26) ;
dans lequel le lave-vaisselle (2) est conçu pour remplir le réservoir de lavage (26) avec du liquide de lavage (24) avant le début d'un processus de lavage ; et
dans lequel le lave-vaisselle (2) est conçu pour exécuter un processus de chauffage pour chauffer le liquide de lavage (24) dans le réservoir de lavage (26), dans lequel le processus de chauffage comprend :
- l'activation du compresseur (8) et de la pompe de circuit intermédiaire (22) à un premier moment pour augmenter une température du fluide intermédiaire (18) ; et
- l'activation de la pompe de circuit de lessive (27) à un deuxième moment après le premier moment, lorsqu'une différence entre la température du fluide intermédiaire (18) et une température du liquide de lavage (24) dans le réservoir de lavage (26) dépasse une valeur prédéterminée.

9. Lave-vaisselle (2) selon la revendication 8, dans lequel le circuit intermédiaire comprend un capteur de température (47), qui est disposé par rapport à une direction d'écoulement du fluide intermédiaire entre le condenseur (9) et l'échangeur de chaleur coaxial (23) et est conçu pour détecter la température du fluide intermédiaire (18).

10. Lave-vaisselle (2) selon la revendication 8 ou 9, dans lequel le lave-vaisselle (2) est conçu pour exécuter le processus de chauffage aussi bien pendant le remplissage du réservoir de lavage (26) avec du liquide de lavage (24) que pendant le processus de lavage.

11. Lave-vaisselle selon la revendication 10, dans lequel le lave-vaisselle (2) est conçu pour exécuter le processus de chauffage lorsqu'un niveau d'eau du liquide de lavage (24) dans le réservoir de lavage (26) dépasse un niveau d'eau minimal.

12. Lave-vaisselle (2) selon l'une des revendications précédentes, dans lequel le circuit de lessive (25) comprend un réservoir de lavage (26) ;
dans lequel le lave-vaisselle (2) est conçu pour remplir le réservoir de lavage (26) avec du liquide de lavage préchauffé (24) avant le début d'un processus de lavage ; et
dans lequel le lave-vaisselle (2) est conçu pour exécuter un processus de préchauffage, dans lequel le processus de préchauffage comprend :
- l'activation de la pompe de circuit de lessive (27) et de la pompe de circuit intermédiaire (22) à un instant de début de préchauffage pour préchauffer le réfrigérant (16) dans le condenseur (9) au moyen du liquide de lavage préchauffé ; et
- l'activation du compresseur (8) après l'expiration d'une période de préchauffage prédéterminée à partir de l'instant de début de préchauffage.

13. Lave-vaisselle (2) selon la revendication 12, dans lequel le lave-vaisselle (2) est conçu pour ne pas exécuter le processus de préchauffage si une pression de condensation du réfrigérant (16) dépasse une pression de condensation minimale.

14. Lave-vaisselle (2) selon l'une des revendications 12 ou 13, dans lequel le lave-vaisselle (2) est conçu pour exécuter le processus de préchauffage pendant le remplissage du réservoir de lavage (26) avec du liquide de lavage (24) ;
dans lequel le lave-vaisselle (2) est de préférence conçu pour exécuter le processus de préchauffage lorsqu'un niveau d'eau du liquide de lavage (24) dans le réservoir de lavage (26) dépasse un niveau d'eau minimal.
